# EUROPÄISCHE PATENTSCHRIFT

(11) **EP 2 257 586 B1**
(45) Veröffentlichungstag und Bekanntmachung des Hinweises auf die Patenterteilung: **01.02.2012**
(21) Anmeldenummer: 09719513.5
(22) Anmeldetag: 05.03.2009
(51) Int. Cl.: C08G 71/04, C08G 77/38, C08G 77/458, C08G 77/46, C08G 59/14

(54) **NEUE POLYCARBONAT-POLYORGANOSILOXAN- UND/ODER POLYURETHAN-POLYORGANOSILOXAN-VERBINDUNGEN**
NOVEL POLYCARBONATE POLYORGANOSILOXANE AND/OR POLYURETHANE POLYORGANOSILOXANE COMPOUNDS
NOUVEAUX COMPOSÉS DE POLYCARBONATE-POLYSILOXANE ORGANIQUE ET/OU DE POLYURÉTHANNE-POLYSILOXANE ORGANIQUE

(30) Priorität: 11.03.2008 DE 102008013584
(43) Veröffentlichungstag der Anmeldung: 08.12.2010
(73) Patentinhaber: Momentive Performance Materials GmbH, 51368 Leverkusen (DE)
(72) Erfinder: LANGE, Horst, 44879 Bochum (DE); WAGNER, Roland, 53227 Bonn (DE); HOFFMÜLLER, Gunnar, 51373 Leverkusen (DE); SOCKEL, Karl-Heinz, 51373 Leverkusen (DE); SIMON, Walter, 51375 Leverkusen (DE)
(74) Vertreter: Gille Hrabal Struck Neidlein Prop Roos
(86) Internationale Anmeldenummer: PCT/EP2009/052594
(87) Internationale Veröffentlichungsnummer: WO 2009/112418

(56) Entgegenhaltungen:
- WO-A-2005/058863
- DE-A1- 19 709 920
- DE-C1- 19 505 892
- CHRISTINA NOVI, AHMED MOURRAN, HELMUT KEUL, MARTIN MÖLLER: "Ammonium-Functionalized Polydimethylsiloxanes: Synthesis and Properties" MACROMOLECULAR CHEMISTRY AND PHYSICS, Bd. 207, 2006, Seiten 273-286, XP002528393 in der Anmeldung erwähnt

## Beschreibung

Die vorliegende Erfindung betrifft neue Polycarbonat-Polyorganosiloxan- und/oder Polyurethan-Polyorganosiloxan-Verbindungen, Verfahren zu ihrer Herstellung, ihre Verwendung, sie enthaltende funktionelle Formulierungen, Vorstufen zu ihrer Herstellung, sowie reaktive Zusammensetzungen, die die genannten Vorstufen enthalten.

Quaternäre Ammoniurnstrukturen enthaltende Siloxanblockcopolymere sind umfänglich bekannt. Es kann sich dabei einerseits um Diblockcopolymere von Typ Siloxan/quaternäre Ammoniumeinheit handeln (DE 3340708, EP 282720, US 6,240,929, US 6,730,766). Andererseits sind Triblockcopolymere entwickelt worden, die auf der Kombination Siloxan-/quaternäre Ammonium-/Polyetherblockeinheit beruhen (WO 02/10256, WO 02/10257, WO 02/10259, WO 2004/090007, WO 03/078504, WO 2004/041912, WO 2004/042136). Wesentlicher Vorteil dieser Triblockcopolymeren ist, dass deren Struktur flexibel und in sehr weiten Grenzen den konkreten Produktanforderungen angepasst werden können.

Aus GB 1128642 sind Harnstoff- und Urethangruppierungen enthaltende quaternäre Ammoniumverbindungen bekannt. Die Umsetzung von amino- oder hydroxyterminierten Siloxanen mit Diisocyanaten führt zu isocyanat-terminierten Zwischenstufen, welche dann beispielsweise mit primären-tertiären Di- oder Triaminen reagieren, woraufhin die tertiäre Aminogruppe quatemiert wird. Es ist möglich, z.B. Oligoethylenglykole als Kettenverlängerer einzusetzen, was jedoch durch Verbrauch von Isocyanatgruppen direkt zu einer Senkung der Menge an quaternären Ammoniumgruppen führt. Nachteil dieser Lösung ist somit, dass eine flexible, weite Grenzen umfassende Anpassung der Struktur an die konkreten Produktanforderungen nicht erfolgen kann.

Es ist ebenfalls vorgeschlagen worden, eine unsymmetrisch substituiertes Carbonat als Linkergruppe zur Synthese von siloxanmodifizierten diquaternären Verbindungen zu verwenden, welche Urethangruppen enthalten (WO 2005/058863).

Zusätzlich ist beschrieben worden, diesen unsymmetrisch substituierten Carbonatlinker bei der Synthese von Siloxaneinheiten enthaltenden Polyurethan-Blockcopolymeren mit eingebauten Aminsalzeinheiten zu verwenden (C.Novi, A.Mourran, H.Keul, M.Möller, Macromol. Chem. Phys. 2006, 207, 273-286). Nachteil dieser konkreten Blockcopolymeren ist es, dass sie lediglich über pHsensible Ladungen in Form von Aminsalzen verfügen, was eine reduzierte Substantivität zur Folge hat. Genereller Nachteil dieses Carbonatlinker-basierten Ansatzes ist das Auftreten von freiem Phenol als Abgangsgruppe bzw. die sehr schwierige Anbindung der Carbonatstruktur an geeignete Precursoren unter vollständiger Vermeidung von Phenol.

Weiterhin ist es bekannt, carbonatfunktionalisierte Siloxane mit primäre und sekundäre Aminogruppen bzw. Hydroxylgruppen enthaltenden Kohlenwasserstoffen zu Urethangruppen enthaltenden Siliconen bzw. entsprechenden Estern umzusetzen. Die carbonatfunk-tionalisierten Siloxane werden entweder aus olefinisch ungesättigten Carbonaten durch Hydrosilylierung mit SiH-Siloxanen (US 5,672,338, US 5,686,547) oder durch Insertion von CO₂ in die Epoxygruppe von Epoxysiloxanen (DE 195 05 892) gewonnen. Hinweise auf die Synthese von quaternäre Ammoniumeinheiten enthaltenden Materialien enthalten diese Veröffentlichungen nicht.

Es ist somit Aufgabe der Erfindung, neue Polycarbonat-Polyorganosiloxan- und/oder Polyurethan-Polyorganosiloxan-Verbindungen bereitzustellen, die einerseits eine flexible, weite Grenzen umfassende Anpassung der Struktur an die konkreten Produktanforderungen erlauben und bei denen andererseits unter dem Einfluß von Donor-Akzeptor Wechselwirkungen, z.B. durch die Urethangruppen, Einfluß auf wesentliche Produkteigenschaften genommen werden kann. Es ist eine weitere Aufgabe zu zeigen, dass hierbei die genannten Nachteile des Standes der Technik, wie Phenolhaltigkeit des Endproduktes und schwere Zugänglichkeit geeigneter Precursoren für quaternierte Blockcopolymere vermieden werden können.

Die neuen Polycarbonat-Polyorganosiloxan- und/oder Polyurethan-Polyorganosiloxan-Verbindungen lassen sich einfach, sicher und gezielt herstellen und verfügen über neue interessante Eigenschaften.

Die Erfindung betrifft neue Polycarbonat-Polyorganosiloxan- und/oder Polyurethan-Polyorganosiloxan-Verbindungen, enthaltend mindestens ein Strukturelement der Formel (1): 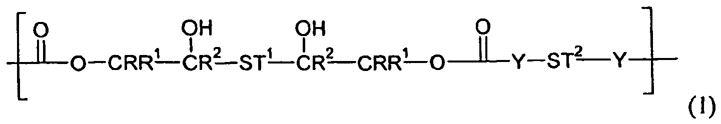 worin
R jeweils ausgewählt wird aus Wasserstoff, Alkyl oder einer Bindung zum Rest ST¹, wobei sich, wenn R eine Bindung zum Rest ST¹ darstellt, cylische Strukturen ausbilden,
R¹ jeweils ausgewählt wird aus Wasserstoff, Alkyl oder einer Bindung zum Rest ST¹, wobei sich, wenn R¹ eine Bindung zum Rest ST¹ darstellt, cylische Strukturen ausbilden,
R² jeweils ausgewählt wird aus Wasserstoff, Alkyl oder einer Bindung zum Rest ST¹, wobei sich, wenn R¹ eine Bindung zum Rest ST¹ darstellt, cylische Strukturen ausbilden,
ST¹ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus
-O-,
-C(O)-, und
einer Polyorganosiloxaneinheit mit 2 bis 1000 Siliciumatomen
enthalten kann, worin
wobei ST¹ keine Gruppen der Formel -O-C(O)-O- und keine Gruppen der Formel -O-C(O)-NH- enthält,
wobei, wenn eine Mehrzahl von Resten ST¹ vorliegt, diese gleich oder verschieden sein können,
Y unabhängig voneinander ausgewählt wird aus: -O-, -S- und NR⁶-, worin
R⁶ Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, NH- und NR³- enthalten kann, worin R³ wie oben definiert ist,
R⁶ eine Bindung zum Rest ST² darstellt unter Bildung cyclischer Strukturen,
ST² ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus
-O-,
-C(O)-,
-NH-,
-NR³-, 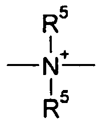 und
einer Polyorganosiloxaneinheit mit 2 bis 1000 Siliciumatomen
enthalten kann, worin
R³ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)- und NH- enthalten kann, und gegebenenfalls durch eine Silylgruppe, wie eine Alkoxysilylgruppe (zum Beispiel eine Trialkoxysilylgruppe) substituiert sein kann, und,
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und NH- enthalten kann, und gegebenenfalls durch eine Silylgruppe, wie eine Alkoxysilylgruppe (zum Beispiel eine Trialkoxysilylgruppe) substituiert sein kann, oder zwei Reste R⁵ mit dem Stickstoffatom, an das sie gebunden sind einen 5- bis 7-gliedrigen Ring bilden, der gegebenenfalls ein oder zwei weitere Heteroatome enthalten kann, oder R⁵ zusammen mit R⁶ einen einen zweiwertigen Alkylenrest bildet, der zur Ausbildung einer cyclischen Struktur unter Einschluß von Y und ST² führt,
wobei, wenn eine Mehrzahl von Resten ST² vorliegt, diese gleich oder verschieden sein können,
mit der Maßgabe, dass wenigstens einer der Reste ST¹ und/oder ST² einen Polyorganosiloxanrest umfasst,
oder Säureadditionsverbindungen und/oder Salze davon.

Bevorzugt steht Y für -O- und -NR⁶-, worin
R⁶ bevorzugt Wasserstoff oder ein geradkettiger, cyclischer oder verzweigter, gesättigter, ungesättigter oder aromatischer Kohlenwasserstoffrest mit bis zu 20 Kohlenstoffatomen ist, der eine oder mehrere Gruppen, ausgewählt aus -O-, -C(O)-, -NH- und -NR³- enthalten kann, worin R³ wie unten definiert ist, und/oder
R⁶ bildet eine Bindung zum Rest ST², wodurch sich cyclische Stukturen bilden. Dabei erfolgt die Bindung von R⁶ zum Rest ST² bevorzugt über einen Rest R⁵.

ST¹ ist bevorzugt ein zwei- oder mehrwertiger, geradkettiger, cyclischer oder verzweigter, gesättigter, ungesättigter oder aromatischer, substituierter oder unsubstituierter Kohlenwasserstoffrest mit bis zu 400 Kohlenstoffatomen ist, der eine oder mehrere Gruppen, ausgewählt aus
-O-,
-C(O)-, und
einer Polyorganosiloxaneinheit mit 2 bis 500 Siliciumatomen
enthalten kann,

ST² ist bevorzugt ein zwei- oder mehrwertiger, geradkettiger, cyclischer oder verzweigter, gesättigter, ungesättigter oder aromatischer, substituierter oder unsubstituierter Kohlenwasserstoffrest mit bis zu 400 Kohlenstoffatomen, der eine oder mehrere Gruppen, ausgewählt aus:
-O-,
-C(O)-,
-NH-,
-NR³-, 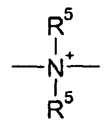 und
einer Polyorganosiloxaneinheit mit 2 bis 500 Siliciumatomen enthalten kann, worin
R³ ein geradkettiger, cyclischer oder verzweigter, gesättigter, ungesättigter oder aromatischer Kohlenwasserstoffrest mit bis zu 20 Kohlenstoffatomen ist, der eine oder mehrere Gruppen, ausgewählt aus -O-, -C(O)- und -NH- enthalten kann, und,
R⁵ ein geradkettiger, cyclischer oder verzweigter, gesättigter, ungesättigter oder aromatischer Kohlenwasserstoffrest mit bis zu 20 Kohlenstoffatomen ist, der eine oder mehrere Gruppen, ausgewählt aus -O-, -C(O)- und -NH- enthalten kann, oder zwei Reste R⁵ mit dem Stickstoffatom, an das sie gebunden sind einen 5- bis 7-gliedrigen Ring bilden, der gegebenenfalls ein oder zwei weitere Heteroatome enthalten kann, oder R⁵ zusammen mit R⁶ einen einen zweiwertigen Alkylenrest bildet, der zur Ausbildung einer cyclischen Struktur unter Einschluß von Y und ST² führt.

Der Fall bei dem R⁵ zusammen mit R⁶ einen einen zweiwertigen Alkylenrest bildet, der zur Ausbildung einer cyclischen Struktur unter Einschluß von Y und ST² führt, tritt beispielsweise auf, wenn - wie weiter unten noch ausführlicher dargestellt wird - als Ausgangsverbindung HY-ST³-NR⁵₂, für die Herstellung der erfindungsgemäßen Verbindungen beispielsweise Methylpiperazin verwendet wird, worin Y = -NR⁶ ist und R⁶ mit R⁵ einen Alkylenrest bilden.

Säureadditionsverbindungen sind solche Verbindungen, die durch gegebenenfalls partielle Neutralisation von aminohaltigen erfindungsgemäßen Verbindungen mit anorganischen oder organischen Protonen-Säuren, wie Salzsäure, Schwefelsäure, Phosphorsäure, C1 bis C22-Carbonsäuren, wie Essigsäure etc. entstehen.

Salze der erfindungsgemäßen Verbindungen resultieren insbesondere aus dem Vorhandensein von quaternären Ammoniumgruppen, welche ein Anion zur Neutralisation der positiven Ladung erfordern. Derartige Anionen schließen insbesondere ein: Carboxylatanionen, wie Acetat, Stearat, Oleat, Undekanoat, Dodekanoat etc., Halogenanionen, wie insbesondere Chlorid, Bromid, Iodid, Sulfat, Hydrogensulfat, Phosphat,

In den erfindungsgemäßen Verbindungen können gleichzeitig protonierte Ammoniumgruppen (H-N⁺) und quaternierte Ammmoniumgruppen (NR₄⁺) vorliegen. In einer bevorzugten Ausführungsform der erfindungsgemäßen Verbindungen stellt mindestens einer der Reste Reste R, R¹ und R² Wasserstoff dar. Bevorzugt stellen Reste R, R¹ und R² Wasserstoff dar, sodass sich Verbindungen der Formel (1a) 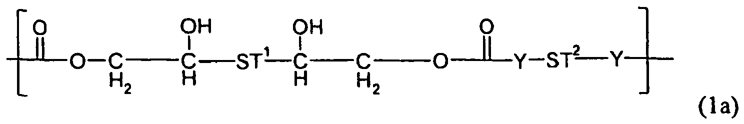 ergeben.

In einer bevorzugten Ausführungsform der Erfindung weisen die erfindungsgemäßen Verbindungen eine lineare Struktur auf. Eine lineare Struktur bedeutet hierbei, dass die polymere, aus den Einheiten der Formel (I) gebildete, Hauptkette im Wesentlichen linear ist, also keine Verzweigungen aufweist. Dies lässt gleichwohl zu, dass in der linearen polymeren Hauptkette cyclische Strukturelemente enthalten sein können.

In einer bevorzugten Ausführungsform der Erfindung sind die Reste ST¹ und ST² jeweils zweiwertige Reste. Dies bedeutet, dass es sich bei den erfindungsgemäßen Verbindungen um lineare Verbindungen handelt, und keine cyclische Strukturen unter Einschluß von R¹ und ST¹ vorliegen.

Eingeschlossen in den erfindungsgemäßen Verbindungen sind auch verzweigte Polycarbonat-Polyorganosiloxan- und/oder Polyurethan-Polyorganosiloxan-Verbindungen, insbesondere solche worin die Verzweigung der Polymerhauptkette über wenigstens einen der Reste ST¹ oder ST² erfolgt, welche in diesem Fall naturgemäß mehr als zweiwertig sein müssen.

Lineare Verbindungen werden insbesondere ausgehend von Ausgangsverbindungen der Formeln 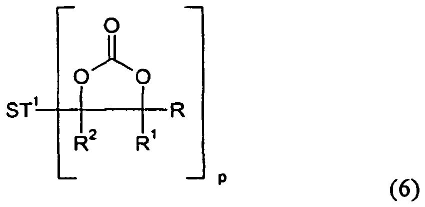 und

ST²-(Y-H)_{q} (7),

erhalten, worin ST¹, R, ST² und Y wie oben definiert sind, und worin p und q jeweils 2 sind. verzweigte erfindungsgemäße Verbindungen werden insbesondere erhalten durch Verwendung der genannten Ausgangs-Verbindungen, in denen q und oder p > 2 ist.

Verzweigte erfindungsgemäße Verbindungen können aber auch erhalten werden, in d dem reaktive Gruppen in der polymeren Hauptkette nachträglich umgesetzt oder vernetzt werden.

So können zum Beispiel durch Umseztung von 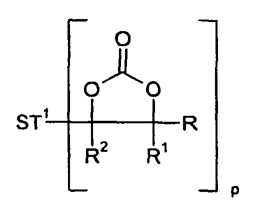 worin p = 2 ist,
und
ST²-(Y-H)_{q}, welche beispielsweise, eine Verbindung der Formel NH₂CH₂CH₂N(CH₃)CH₂CH₂NH₂, NH₂CH₂CH₂CH₂N(CH₃)CH₂CH₂CH₂NH₂ oder Aminoethylpiperazin ist, Verbindungen der Formel (1b): 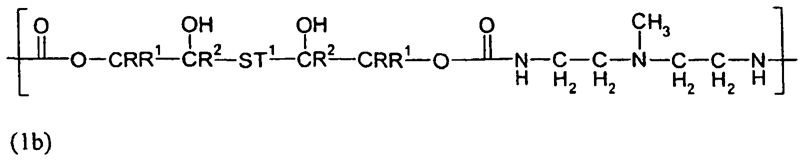 oder 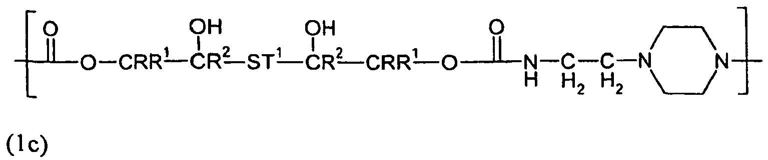 erhalten werden, worin die tertiären Aminogruppen in ST² beispielweise durch polyfunktionelle Quaternierungsmittel, wie ST^{4V}(-Q)ₜ, umgesetzt bzw. vernetzt werden können.

Des Weiteren ist es auch möglich, eine nachträgliche Vernetzung der erfindungsgemäßen Verbindungen mittels der vorliegenden Hydroxylgruppen durch Verwendung von Polyisocyanaten, Polycarbonsäuren bzw. Derivate davon, wie Säurechloride, oder Polyepoxiden durchzuführen.

Die erfindungsgemäßen Polycarbonat-Polyorganosiloxan- und/oder Polyurethan-Polyorganosiloxan-Verbindung enthalten mindestens einen Polyorganosiloxanrest, der bevorzugt die Formel (2) aufweist: 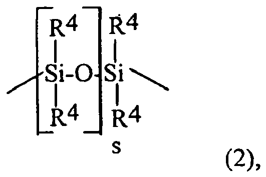 worin
R⁴ ein geradkettiger, cyclischer oder verzweigter, gesättigter, ungesättigter oder aromatischer Kohlenwasserstoffrest mit bis zu 20 Kohlenstoffatomen ist, und/oder R⁴ ist Alkoxyrest, dessen Alkylteil ein geradkettiger, cyclischer oder verzweigter, gesättigter Alkylrest mit bis zu 20 Kohlenstoffatomen ist, der ein oder mehrere Sauerstoffatome (wie zum Beispiel im Falle von Polyalkylenoxyalkoxy-Resten) enthalten kann, und
s = 1 bis 999 ist.

Bevorzugt sind:
- R⁴: C1 bis C20, bevorzugt C1 bis C9, geradkettiger oder cyclischer oder verzweigter, gesättigter oder ungesättigter oder aromatischer Kohlenwasserstoffrest, besonders bevorzugt Methyl und Phenyl und
- s: 1 bis 199, speziell 1 bis 99.

In einem besonders bevorzugten Fall hat die Siloxaneinheit (2) die Stuktur 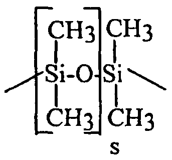 mit s wie oben angegeben.

Eine der Alternative R⁴ = Alkoxy und/oder Alkyl entsprechende Verbindung ST²-(Y-H)_{q}, stellt beispielsweise folgende Verbindung dar:

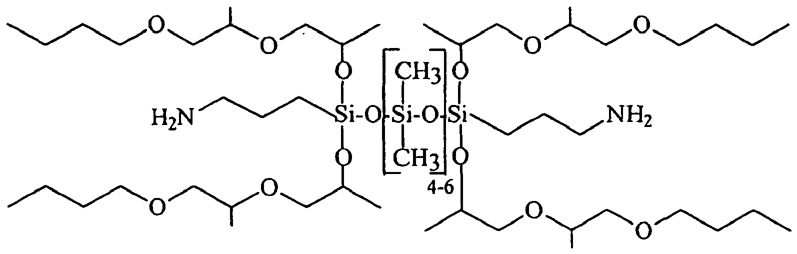

In einer insbesondere für die Anwendung der erfindungsgemäßen Verbindungen im Bereich der Kosmetik, wie im Bereich der Haarpflege, geeigneten Ausführungsform ist s bevorzugt > 199.

In einer insbesondere für die Anwendung der erfindungsgemäßen Verbindungen als Weichmacher insbesondere für Textilien bevorzugten Ausführungsform, ist s bevorzugt 20 bis 200, besonders bevorzugt 20 bis 120.

Besonders bevorzugt enthalten die erfindungsgemäßen Polycarbonat-Polyorganosiloxan- und/oder Polyurethan-Polyorganosiloxan-Verbindung mindestens zwei Polyorganosiloxanreste der Fonnel (2).

Bevorzugt enthalten die erfindunsgemäßen Polycarbonat-Polyorganosiloxan- und/oder Polyurethan-Polyorganosiloxan-Verbindung mindestens zwei Strukturelemente der Formel (1), bevorzugter mindestens 3 Strukturelemente der Formel (1).

Es ist aber auch im Umfang der Erfindung eingeschlossen, dass die erfindungsgemäßen Verbindungen lediglich ein Strukturelement der Formel (1) aufweisen, welche manchmal auch "Butterfly"-Verbindungen bezeichnet werden. Beispiele solcher Verbindungen sind: 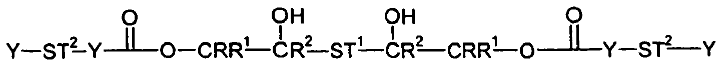 (eine Verbindung, die aus der Umsetzung von 1 mol 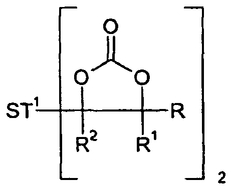 und 2 mol ST²-(Y-H)₂ hervorgeht).

Eine komplexere Butterfly-Struktur wird gebildet durch stufenförmige Umsetzung von ST²-(Y-H)₂ mit 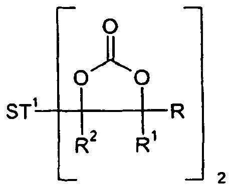 und anschließender Umsetzung mit HY-ST³-NR⁵₂ und ST^{4V}(-Q)₂:

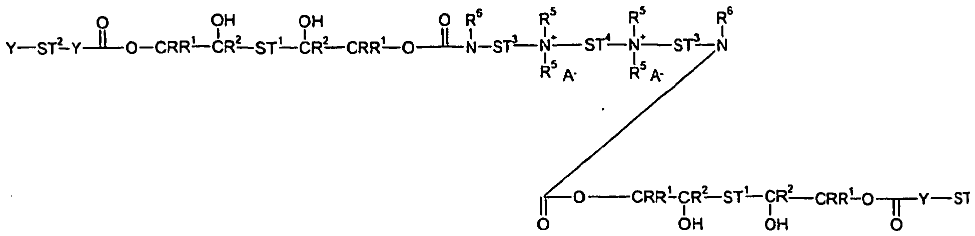

Vorstehende Umsetzung erläutert auch eine Möglichkeit der Bildung von Endgruppen der erfindungsgemäßen Verbindungen. Die Endgruppen können entweder aus den nicht-umgesetzten Endgruppen der eingesetzten polyfunktionellen Monomere resultieren oder es werden reaktive monofunktionelle Verbindungen, wie beispielsweise CH-acide Verbindungen wie Alkohole, Amine oder Wasser, oder Säuren zur Kettenterminierung zugesetzt.

In den erfindungsgemäßen Polyurethan-Polyorganosiloxan-Verbindungen ist Y = bevorzugt -NR⁶-, worin R⁶ wie oben definiert ist. Besonders bevorzugt ist Y = NH-.

Die erfindungsgemäßen Polycarbonat-Polyorganosiloxan- und/oder Polyurethan-Polyorganosiloxan-Verbindung weisen bevorzugt Aminogruppen, protonierte Aminogruppen, quaternäre Ammoniumgruppen und/oder Polyethergruppen auf. Besonders bevorzugt weisen sie quaternäre Ammoniumgruppen und/oder Polyethergruppen auf, da diese den erfindungsgemäßen Verbindungen ausreichende Hydrophilie bei guter Substantivität verleihen.

In den erfindungsgemäßen Polycarbonat-Polyorganosiloxan- und/oder Polyurethan-Polyorganosiloxan-Verbindungen ist ST¹ bevorzugt ungleich ST².

In den erfindungsgemäßen Polycarbonat-Polyorganosiloxan- und/oder Polyurethan-Polyorganosiloxan-Verbindung werden in einer bevorzugten Ausführungsform ST¹ und/oder ST² aus der Gruppe ausgewählt, die besteht aus: Polyorganosiloxan-haltigen Resten, Polyetherhaltigen Resten, Polyorganosiloxan- und Polyether-haltigen Resten, monocyclischen oder polycyclischen Kohlenwasserstoffresten, acyclischen, gegebenenfalls Sauerstoff-enthaltenden Kohlenwasserstoffresten und aromatische Gruppen aufweisenden, gegebenenfalls Sauerstoff enthaltenden Kohlenwasserstoff resten. Bevorzugt enthält mindestens einer der Reste ST¹ und/oder ST² eine Polyalkylenoxy-Gruppe.

In einer weiteren bevorzugten Ausführungsform der Erfindung weisen die Polycarbonat-Polyorganosiloxan- und/oder Polyurethan-Polyorganosiloxan-Verbindungen enthaltend ST¹ und/oder ST² ein Strukturelement der folgenden Formel: 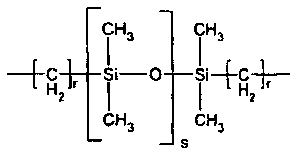 auf,
worin s wie oben definiert ist, und
r=1 bis 12 ist.

Die erfindungsgemäßen Polycarbonat-Polyorganosiloxan- und/oder Polyurethan-Polyorganosiloxan-Verbindung werden insbesondere hergestellt durch die Umsetzung einer Verbindung der Formel (6) 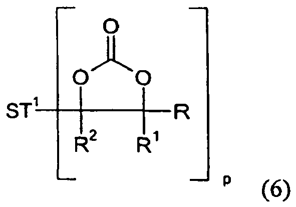 worin R, R¹, R² und ST¹ wie oben definiert sind, und p≥2, bevorzugt p = 2 ist,
mit mindestens einer Verbindung der Formel (7)

ST²-(Y-H)_{q} (7),

worin ST² und Y wie oben definiert sind, und worin q ≥ 2, bevorzugt q =2 ist. Dabei ist bevorzugt Y = NR⁶ ist, worin R⁶ wie oben definiert, bevorzugt Wasserstoff.

In einer weiteren bevorzugten Ausführungsform der Erfindung weisen die Polycarbonat-Polyorganosiloxan- und/oder Polyurethan-Polysiloxan-Verbindungen mindestens einen Rest ST² der Formel (5) auf:

ST³-N⁺(R⁵)₂-ST⁴-N⁺(R⁵)₂-ST³- + 2 A⁻ (5)

worin R⁵ wie oben definiert ist,

ST³ ein geradkettiger oder cyclischer oder verzweigter, gesättigter oder ungesättigter oder aromatischer, substituierter oder unsubstituierter Kohlenwasserstoffrest mit 2 bis 100 Kohlenstoffatomen ist, der -O-, -C(O)-, NH- und/oder NR³- enthalten kann, worin R³ wie oben definiert ist, und,

ST⁴ geradkettiger oder cyclischer oder verzweigter, gesättigter oder ungesättigter oder aromatischer, substituierter oder unsubstituierter Kohlenwasserstoffrest mit 2 bis 200 Kohlenstoffatomen, der -O-, -C(O)-, NH-, NR³- und/oder eine Polyorganosiloxaneinheit mit 2 bis 500, bevorzugt 2 bis 200 Siliciumatomen enthalten kann, worin R³ wie oben definiert ist, und
A⁻ ein organisches oder anorganisches Anion darstellt.

Substituenten der Kohlenwasserstoffreste für ST³ und ST⁴ schließen ein oder mehrere, bevorzugt ein bis drei Substituenten ein, die bevorzugt ausgewählt werden aus der Gruppe, die besteht aus: Hydroxy, Halogen, wie Fluor oder Chlor, und Cyano. Dabei ist Hydroxy besonders bevorzugt, insbesondere bei ST⁴.

Unter Einbeziehung von Formel (2) ergibt sich bevorzugt für die erfindungsgemäßen quaternierte Polycarbonat-Polyorganosiloxan- und/oder Polyurethan-Polyorganosiloxan-Verbindungen Formel (3): 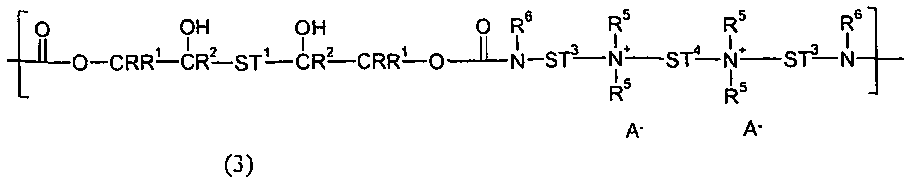 worin
R, R¹, R², ST¹, ST³, ST⁴, R⁶ und R⁵ wie oben definiert sind, und
A⁻ ein organisches oder anorganisches Anion ist,
mit der Maßgabe, dass wenigstens einer der Reste ST¹, ST³ und ST⁴ einen Polyorganosiloxanrest enthält.

Die vorstehend beschriebenen erfindungsgemäßen Verbindungen werden bevorzugt durch ein Verfahren hergestellt, welches die Umsetzung einer Verbindung der Formel 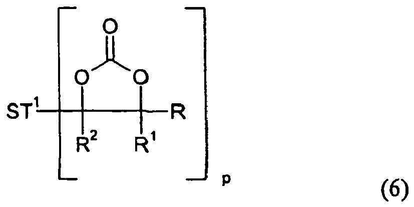 worin R, R¹, R² und ST¹ wie oben definiert sind, und p≥ 2, bevorzugt p = 2 ist,
mit einer Verbindung der Formel (8)

HY-ST³-NR⁵₂ (8),

worin ST³, Y und R⁵ wie oben definiert sind,
und einer Verbindung der Formel (9)

ST^{4V}(-Q)ₜ (9),

worin
Q ein zur Alkylierung einer Aminogruppe befähigter Rest ist, ST^{4V} gemeinsam mit dem aus Q nach der Quatemierungsreaktion hervorgehenden Molekülteil den Rest ST⁴ bildet, und t ≥ 2, bevorzugt t = 2 ist.

Bevorzugt ist Y = NR⁶, wobei R⁶ wie oben definiert, bevorzugt Wasserstoff, ist.

Bei den ST³ einführenden Reaktionspartnern HY-ST³-NR⁵₂, handelt es sich um Substanzen, die über primär-tertiäre oder sekundär-tertiäre Diaminostrukturen verfügen, wie beispielsweise N,N-Dimethylpropylendiamin. Die ebenfalls bevorzugte Verwendung von z.B. N-Methylpiperazin beinhaltet die oben behandelte Möglichkeit, dass sich cyclische Strukturen bilden können, die Y und ST² umfassen. So bilden sich unter Verwendung von N-Methylpiperazin als HY-ST³-NR⁵₂ (Y = NR⁶, ST³ = -CH₂-CH₂-, R⁵ = -CH₃ und R⁵ und R⁶ bilden -CH₂-CH₂-) beispielsweise Verbindungen der Formel (3a) 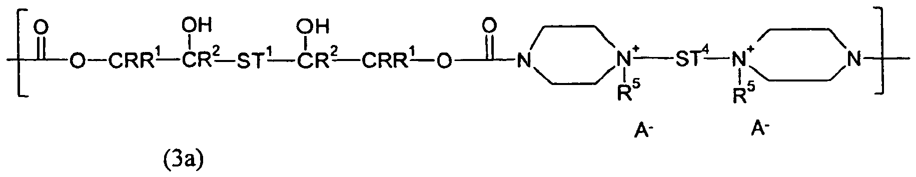 aus.

Auch die Verwendung von primär-sekundären Diaminen zur Einführung von ST³ ist prinzipiell möglich. Verbliebene Aminogruppen können dann im Anschluss an den Kettenaufbau quaterniert werden. Die Verwendung von ST³-Precursoren mit primären oder sekundären Aminogruppen führt zum Aufbau von Polyurethanen.

Alternativ können auch tertiär aminofunktionalisierte Alkohole, z.B. HOCH₂CH₂N(CH₃)₂ zur Einführung von ST³ benutzt werden. In diesem Fall werden Polycarbonate (Kohlensäureester) gebildet.

Es liegt im Rahmen der Erfindung, höherfunktionelle Amine mit mindestens zwei tertiären Aminfunktionen zur Erzeugung verzweigter ST³ Strukturen zu verwenden. Beispiele sind:
N,N,N',N'-Tetramethyldipropylentriamin (Jeffcat ZR50B Huntsman) und
N,N,N',N'-Tetramethyldiethylentriamin.

Bei den ST⁴ enthaltenden Reaktionspartnern ST^{4V}(-Q)ₜ, handelt es sich um poly-, insbesondere difunktionelle Alkylierungsmittel, die bevorzugt über Epoxygruppen, Halogencarbonsäureestergruppen und Halogenalkylgruppen verfügen.
Bevorzugter handelt es sich bei den kohlenwasserstoffbasierten Epoxidderivaten um
- Kohlenwasserstoffdiepoxide, beispielsweise Vinylcyclohexendiepoxid
- Epichlorhydrin
- epoxyterminierte Polyether, bevorzugt ethylenoxid- und propylenoxidbasierte Polyether, beispielsweise glycidyltermininierte Polyether
- epoxyterminierte Polyester,
- epoxyterminierte Polycarbonate

Bei den halogenfunktionalisierten Kohlenwasserstoffderivaten, bevorzugt Chloriden und Bromiden, handelt es sich vorzugsweise um
- Kohlenwasserstoffdihalogenide, gegebenenfalls unterbrochen durch Polyorganosiloxaneinheiten,
- halogenterminierte Polyether, bevorzugt ethylenoxid- und propylenoxidbasierte
- Polyether
- Halogencarbonsäureester von Kohlenwasserstoffdiolen und Polyethern, bevorzugt ethylenoxid- und propylenoxidbasierten Polyethern, speziell Chloressigsäureester, Chlorpropionsäureester und Chlorbutansäureester von Kohlenwasserstoffdiolen und Polyethern.

Es liegt ebenfalls im Rahmen der Erfindung, difunktionelle Säurealkoxylate in entsprechende Glycidyl-, Halogen oder Halogencarbonsäureester-Derivate zu überführen und erfindungsgemäß einzusetzen. Diese leiten sich zum Beispiel von Bernsteinsäure ab. Beispiele solcher Verbindungen schließen ein: 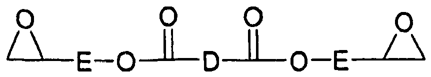 worin D ein aliphatischer oder aromatischer gegebenenfalls substituierter Kohlenwasserstoffrest ist, wie zum Beispiel:

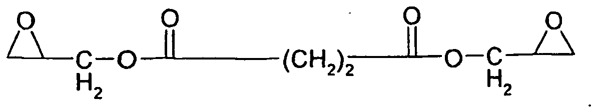

Die Synthese der besonders bevorzugten Chlorcarbonsäureester erfolgt in bekannter Weise (Organikum, Organisch-Chemisches Grundpraktikum, 17. Auflage, VEB Deutscher Verlag der Wissenschaften, Berlin 1988, S. 402-408) durch Reaktion der Diolkomponente mit den entsprechenden Halogencarbonsäureanhydriden oder Halogencarbonsäurechloriden.

In einer weiteren Ausführungsform handelt es sich bei den Kohlenwasserstoffresten ST⁴ um komplexere α,ω-epoxy- oder halogenterminierte Strukturen, die sich von α,ω-hydroxyfunktionalisierten Präpolymeren ableiten.

Bevorzugt handelt es sich bei diesen α,ω-hydroxyfunktionalisierten Präpolymeren um die Umsetzungsprodukte von
- Diolen mit Diisocyanaten
- OH terminierten Polyethern, bevorzugt ethylenoxid- und propylenoxidbasierten
- Polyethern mit Diisocyanaten,
- OH terminierte Polyester
- OH terminierte Polycarbonate.

Diese α,ω-hydroxyfunktionalisierten Präpolymeren werden in einer bevorzugten Ausführungsform in die entsprechenden α,ω-Nalogencarbonsäureester, speziell Chloressigsäureester, Chlorpropionsäureester und Chlorbutansäureester überführt.

Die erfindungsgemäße Einführung von Siloxanblöcken in ST⁴ erfolgt bevorzugt über
- α,ω-epoxyterminierte Siloxane, bevorzugt α,ω-glycidyl- und epoxycyclohexylterminierte Siloxane,
- α,ω-halogenalkylterminierte Siloxane, bevorzugt chlorpropyl- und chlorpropenylterminierte Siloxane,
- α,ω-halogencarbonsäureesterterminierte Siloxane, bevorzugt Ester der Chloressigsäure, Chlorpropionsäure und Chlorbutansäure,
- α,ω-halogencarbonsäureesterterminierte Polyethersiloxane, bevorzugt Ester der Chloressigsäure, Chlorpropionsäure und Chlorbutansäure.

Die Herstellung der in ST⁴ eingehenden α,ω-epoxyterminierten Siloxane und α,ω-halogenalkylterminierten Siloxane ist im Stand der Technik beschrieben (Silicone, Chemie und Technologie, Vulkan Verlag Essen 1989, S. 85-90 und 120).

Die Herstellung von α,ω-halogencarbonsäureesterterminierten Siloxanen kann in Analogie zur Vorgehensweise gemäß WO 02/10256, Beispiel 1 erfolgen. Hierbei werden SiH-Siloxane mit Halogencarbonsäureestern von olefinisch oder acetylenisch ungesättigten Alkoholen umgesetzt.

Die Herstellung α,ω-Halogencarbonsäureester-terminierten Polyethersiloxanen kann in Analogie zu WO 02/10257 Beispiel 1 erfolgen. Hierbei werden SiH-Siloxane mit Halogencarbonsäureestern olefinisch oder acetylenisch ungesättigter Polyether umgesetzt. Alternativ ist es möglich, Polyethersiloxane mit Halogencarbonsäuren, deren Anhydriden oder Säurechloriden umzusetzen (US 5,153,294, US 5,166,297).

In einer weiteren Ausführungsform erfolgt die Einführung von Siloxanblöcken in ST⁴ über α,ω-epoxy- oder halogenfunktionalisierte Siloxanpräpolymere, welche bevorzugt aus den entsprechenden α,ω-hydroxyalkyl oder α,ω-hydroxpolyether-terminierten Siloxanpräpolymeren gewonnen werden können.

Diese OH-terminierten siloxanhaltigen Präpolymeren werden bevorzugt durch Reaktion von
- α,ω-hydroxyalkyl-terminierten Siloxanen mit Diisocyanaten,
- α,ω-polyether-terminierten Siloxanen mit Diisocyanaten,
hergestellt und anschließend in die Epoxy- und Halogenderivate überführt. Eine bevorzugte Ausführungsform stellen die α,ω-halogencarbonsäure-funktionalisierten Siloxanpräpolymere dar, welche durch Veresterung mit z.B. den Anhydriden und Säurechloriden zugänglich sind.

In einer speziellen Ausführungsform können kohlenwasserstoff- und siloxan-basierte Präpolymere für ST⁴ dadurch gewonnen werden, daß α,ω-epoxy- oder halogenfunktionalisierte Vorstufen mit einem stöchiometrischen Unterschuß an bissekundären Aminen, z.B. Piperazin oder bis-sekundär aminofunktionellen Siloxanen zur Reaktion gebracht werden, zum Beispiel:

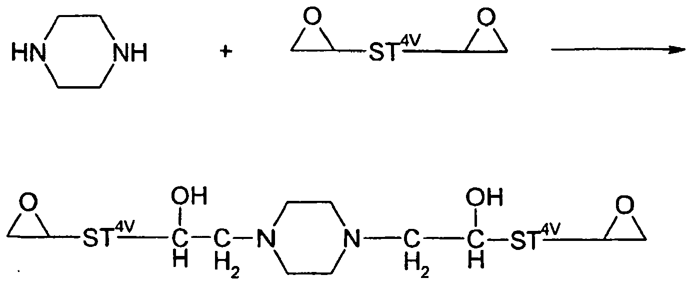

In einer weiteren speziellen Ausführungsform können kohlenwasserstoff- und siloxanbasierte Präpolymere für ST⁴ dadurch gewonnen werden, daß alpha,omega-epoxy-funktionalisierte Vorstufen mit einem stöchiometrischen Unterschuß an primären Aminen, z.B. Ethanolamin, NH₂CH₂CH₂CH₂Si(CH₃)₂OSi(CH₃)₃ oder NH₂CH₂CH₂CH₂Si[OCH(CH₃)₂]₃ zur Reaktion gebracht werden. Hierdurch ergibt sich beispielsweise die Möglichkeit, gezielt Siloxan-, Silan- oder auch reaktive Alkoxysilan-Strukturen in ST⁴ einzuführen, zum Beispiel:

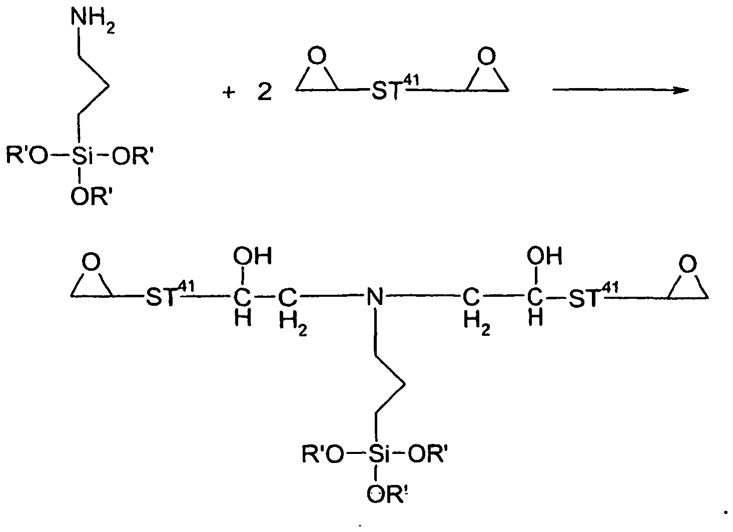

Es liegt weiterhin im Rahmen der Erfindung, höherfunktionelle kohlenwasserstoff oder siloxanbasierte Substanzen zur Formierung des Restes ST⁴ einzusetzen. Diese Materialien enthalten mehr als zwei der vorstehend behandelten Epoxy-oder Halogenfunktionen.

Beispiele für höherfunktionelle kohlenwasserstoffbasierte Substanzen sind die Glycidyl- oder Chloressigsäureesterderivate von Glycerol, Pentaerythrol, Sorbitol, und von deren Ethoxylaten/Propoxylaten. Es liegt ebenfalls im Rahmen der Erfindung, höherfunktionelle Säurealkoxylate in entsprechende Glycidyl- oder Chloressigsäureester-Derivate zu überführen und erfindungsgemäß einzusetzen. Diese leiten sich zum Beispiel von Trimellitsäure oder Pyromellitsäure ab.

Geeignete höherfunktionelle siloxanbasierte Substanzen mit α,ω- und/oder kammartiger Epoxy- oder Halogen, bevorzugt Halogencarbonsäureester-Substitution können beispielsweise aus hydroxyfunktionellen Precursoren gewonnen werden, welche durch Addition von Allylalkohol, Butindiol und den Alkoxylaten von Allylalkohol oder Butindiol an entsprechende SiH-Siloxane zugänglich werden. Alternativ können beispielsweise ungesättigte epoxy- oder halogencarbonsäureesterfunktionelle Precursoren an entsprechende SiH-Siloxane addiert werden.

Wesentlich ist, dass die Funktionalität dieser höherfunktionellen kohlenwasserstoff-basierten oder siloxanbasierten Substanzen größer 2 ist.

Es liegt weiterhin im Rahmen der Erfindung, monofunktionelle kohlenwasserstoffbasierte oder siloxanbasierte Substanzen zur Formierung des Restes ST⁴ einzusetzen. Diese Materialien enthalten eine der vorstehend behandelten Epoxy-oder alogenfunktionen.

Beispiele für monofunktionelle kohlenwasserstoffbasierte Substanzen sind die Glycidyl- oder Chloressigsäureesterderivate von Alkanolen, beispielsweise Ethanol, 2-Propanol, Dodecanol und Octadecanol, Alkenolen, beispielsweise Allylalkohol, Hexenol, Oleylalkohol und Alkinolen, beispielsweise Propinol, und die Alkoxylate, speziell Ethoxylate/Propoxylate der genannten monofunktionellen Alkohole. Es liegt ebenfalls im Rahmen der Erfindung, Fettsäurealkoxylate in entsprechende Glycidyl-oder Chloressigsäureesterderivate zu überführen und erfindungsgemäß einzusetzen. Geeignete monofunktionelle siloxanbasierte Substanzen mit Epoxy- oder Halogen-, bevorzugt Halogencarbonsäureestersubstitution sind z.B. aus WO 02/10256 bekannt. Sie können beispielsweise aus ungesättigten epoxy- oder halogencarbonsäureesterfunktionellen Precursoren gewonnen werden, welche an entsprechende SiH-Siloxane addiert werden.

Bei Verwendung von epoxyhaltigen Substanzen zur Einführung von ST⁴ wird in aus dem Stand der Technik bekannter Weise in stöchiometrischen Mengen Säure zugesetzt. Bei den Anionen A⁻ handelt es sich um anorganische Anionen, wie Halogenid, speziell Chlorid und organische Anionen, wie Carboxylat, speziell C2 bis C18-Carboxylat, Alkylpolyethercarboxylat, Alkylsulfat, speziell Methosulfat, Sulfonat, speziell Alkylsulfonat und Alkylarylsulfonat, ganz speziell Tolylsulfonat.

Bei den Molekülen zur Einführung von ST¹ handelt es sich um poly-, insbesondere difunktionelle Cyclocarbonat-Precursoren. Diese leiten sich von kohlenwasserstoff-oder siloxanbasierten Strukturen ab.

In einer bevorzugten Ausführungsform leiten sich die kohlenwasserstoff- oder siloxanbasierten Cyclocarbonat-Precursoren von entsprechenden epoxyfunktionalisierten Derivaten ab. Diese können durch basenkatalysierte Insertion von CO₂ in den Epoxidring in die entsprechenden Cyclocarbonate überführt werden (DE 195 05 892).

Als epoxyfunktionalisierte Derivate zur Umsetzung mit CO₂ eignen sich somit beispielsweise auch die vorstehend beschriebenen Verbindungen der Formel (10)

Q-ST^{4V}-Q (10),

Bei den Epoxyderivaten, die zu den ST¹ gebenden Cyclocarbonaten führen, handelt es bevorzugt um
- Kohlenwasserstoffdiepoxide, beispielsweise Vinylcyclohexendiepoxid
- epoxy-terminierte Polyether, bevorzugt ethylenoxid- und propylenoxidbasierte Polyether, beispielsweise glycidyltermininierte Polyether
- epoxy-terminierte Polyester,
- epoxy-terminierte Polycarbonate

Es liegt ebenfalls im Rahmen der Erfindung, difunktionelle Säurealkoxylate in entsprechende Glycidylderivate zu überführen und erfindungsgemäß einzusetzen. Diese leiten sich zum Beispiel von Bernsteinsäure ab.

In einer weiteren Ausführungsform handelt es sich bei den Kohlenwasserstoffresten ST¹ um Strukturen, die sich von komplexeren α,ω-Epoxid-Präpolymeren ableiten. Diese wiederum gehen bevorzugt auf α,ω-hydroxyfunktionalisierte Präpolymere zurück, beispielsweise auf die Umsetzungsprodukte von
- Diolen mit Diisocyanaten
- OH-terminierten Polyethern, bevorzugt ethylenoxid- und propylenoxidbasierten Polyethern mit Diisocyanaten,
- OH terminierte Polyester,
- OH terminierte Polycarbonate,
welche beispielsweise durch Reaktion mit Epichlorhydrin in Epoxide überführt werden können.

Bei den siloxanbasierten Epoxyderivaten, die zu den ST¹ gebenden Cyclocarbonaten führen, handelt es bevorzugt um
- α,ω-epoxyterminierte Siloxane, bevorzugt α,ω-glycidyl- und epoxycyclohexylterminierte Siloxane, deren Synthese bereits im Zusammenhang mit ST⁴ Precursoren besprochen wurde.

In einer weiteren Ausführungsform kann es sich bei den siloxanbasierten Epoxy-Precursoren um α,ω-Epoxyderivate von α,ω-hydroxypolyether-terminierten Siloxanpräpolymeren handeln.

In einer anderen bevorzugten Ausführungsform leiten sich die kohlenwasserstoff-oder siloxanbasierten Cyclocarbonat-Precursoren von entsprechenden bis-1,2-diolfunktionalisierten Derivaten ab. Diese können durch Reaktion mit Phosgen oder katalysierte Umesterung mit Dialkylcarbonaten, beispielsweise Dimethylcarbonat, in die entsprechenden Cyclocarbonate überführt werden (DE 195 05 892).

Bei den bis-1,2-Diolderivaten, die zu den ST¹ gebenden Cyclocarbonaten führen, handelt es bevorzugt um Diglycerin, höhere Oligoglycerine oder bis-glycerolterminierte Ether oder Polyetherstrukturen. Es liegt ebenfalls im Rahmen der Erfindung, difunktionelle Säuren in entsprechende bis-1,2-Diolderivate zu überführen. Beispiele hierfür sind entsprechende bis-Glycerolester von Dicarbonsäuren, z.B. von Bernsteinsäure.

Bei den siloxanbasierten bis-1,2-Diolderivaten, die zu den ST¹ gebenden Cyclocarbonaten führen, handelt es bevorzugt um
- α,ω-1,2-diolterminierte Siloxane, bevorzugt synthetisiert aus SiH Siloxanen und Glycerolmonoallylether oder Trimethylolpropanmonoallylether.

In einer anderen bevorzugten Ausführungsform leiten sich die zu ST¹ führenden siloxanbasierten α,ω-Cyclocarbonate von entsprechenden SiH-Siloxanen ab. Diese werden durch Addition an olefinisch oder acatylenisch ungesättigte Cyclocarbonate direkt in die cyclocarbonattereminierten Strukturen überführt (US 5,672,338,

US 5,686,547). Ein Beispiel für ein bevorzugtes olefinisch ungesättigtes Cyclocarbonat ist Glycerolcarbonatallylether. Dieser wiederum kann bevorzugt aus Allylglycidether durch CO₂-Insertion oder aber aus Glycerolmonoallylether durch Reaktion mit Phosgen oder Umesterung mit z.B. Dimethylcarbonat gewonnen werden.

In einer anderen bevorzugten Ausführungsform leiten sich die zu ST¹ führenden Cyclocarbonate von Dicarbonsäureesterstrukturen, bevorzugt kohlenwasserstoff-basierten Dicarbonsäureester-Strukturen ab. Hierzu werden z.B. die entsprechenden Dicarbonsäuren bzw. die Säurehalogenide mit Glycerolcarbonat direkt verestert. Ein Beispiel für eine geeignete Dicarbonsäure ist Bernsteinsäure.

Es liegt weiterhin im Rahmen der Erfindung höherfunktionelle kohlenwasserstoffbasierte oder siloxanbasierte Substanzen zur Formierung des Restes ST¹ einzusetzen. Diese Materialien enthalten mehr als zwei der vorstehend behandelten Cyclocarbonatfunktionen.

Beispiele für höherfunktionelle kohlenwasserstoffbasierte Substanzen sind die Cyclocarbonatderivate von Glycerol, Pentaerythrol, Sorbitol, und von deren Ethoxylaten/Propoxylaten, welche sich wiederum bevorzugt von den Glycidylderivaten ableiten. Es liegt ebenfalls im Rahmen der Erfindung, höherfunktionelle Säurealkoxylate in entsprechende Glycidylderivate und nachfolgend Cyclocarbonatderivate zu überführen und erfindungsgemäß einzusetzen. Diese leiten sich zum Beispiel von Trimellitsäure oder Pyromellitsäure ab.

Von derartigen höherfunktionelten Säuren wie z.B. Trimellitsäure oder Pyromellitsäure leiten sich durch Reaktion mit z.B. Glycerolcarbonat höherfunktionelle Cyclocarbonatester ab.

Geeignete höherfunktionelle siloxanbasierte Substanzen mit α,ω- und/oder kammartiger Cyclocarbonatsubstitution leiten sich bevorzugt von SiH, epoxy- oder 1,2-diolfunktionalisierten Materialien ab. Diese können, wie weiter oben bereits beschrieben, durch jeweils geeignete Reaktionen in entsprechende höherfunktionelle Cyclocarbonate überführt werden.

Wesentlich ist, dass die Funktionalität dieser höherfunktionellen kohlenwasserstoffbasierten oder siloxanbasierten Substanzen größer 2 ist.

Es liegt weiterhin im Rahmen der Erfindung, partiell monofunktionelle kohlenwasserstoffbasierte oder siloxanbasierte Substanzen zur Formierung des Restes ST¹ einzusetzen. Diese Materialien enthalten eine Cyclocarbonatfunktion als Endgruppe.

Beispiele für monofunktionelle kohlenwasserstoffbasierte Substanzen sind Ethylencarbonat, Propylencarbonat, Glycerolcarbonat, die Carbonatetherderivate von Alkanolen, beispielsweise Ethanol, 2-Propanol, Dodecanol und Octadecanol, Alkenolen, beispielsweise Allylalkohol, Hexenol, Oleylalkohol und Alkinolen , beispielsweise Propinol, und die Alkoxylate, speziell Ethoxylate/Propoxylate der genannten monofunktionellen Alkohole. Es liegt ebenfalls im Rahmen der Erfindung, Fettsäurealkoxylate in entsprechende Carbonatetherderivate zu überführen und erfindungsgemäß einzusetzen.

Es liegt weiter im Rahmen der Erfindung, monofunktionelle Carbonatesterderivate, ausgehend von gesättigten und ungesättigten Carbonsäuren, wie Essigsäure, Dodecansäure, Stearinsäure, Undecensäure, Ölsäure, einzusetzen. Diese werden, wie bereits ausgeführt, bevorzugt durch Reaktion der Säurehalogenide mit z.B. Glycerolcarbonat synthetisiert.

Geeignete siloxanbasierte monofunktionelle Cyclocarbonate leiten sich bevorzugt von SiH-, epoxy- oder 1,2-diolfunktionalisierten Materialien ab. Diese können, wie weiter oben bereits beschrieben, durch jeweils geeignete Reaktionen in entsprechende monofunktionelle Cyclocarbonate überführt werden.

Dem Wesen nach werden monofunktionelle und/oder höherfunktionelle ST¹ und ST² bzw. ST⁴-Precursoren eingesetzt, zur Molekulargewichtssteuerung und um im Falle höherfunktioneller Verbindungen eine gezielte Abweichung von der durch difunktionellen ST¹ und ST² bzw. ST⁴ Precursoren vorgegebenen linearen Struktur zu erreichen, und dabei das Molekulargewicht und den Verzweigungsgrad gezielt zu beeinflussen. Weiterhin kann die Verwendung monofunktioneller und/oder höherfunktioneller ST¹ und ST² bzw. ST⁴ Precursoren dazu dienen, das innere Verhältnis ST¹ : ST² bzw. ST⁴ gezielt zu verschieben. Die Kombination von z.B. di-und trifunktionellen ST² Precursoren mit mono- und difunktionellen ST¹ Precursoren führt zu einem molaren Überschuß an ST¹ Segmenten gegenüber ST² bzw. ST⁴ Segmenten.

Im Ergebnis der dargestellten Gesamtreaktionssequenz werden insbesondere bei Anwendung der Quatemierungsverbindungen ST^{4V}(-Q)ₜ, Polycarbonat-Polyorganosiloxan- und/oder Polyurethan-Polyorganosiloxan-Polyaminonium-Verbindungen erhalten, die mindestens in einem der Strukturelemente ST¹ und/oder ST² über Siloxaneinheiten verfügen. Die Einführung quaternierte Stickstoffatome kann naturgemäß auch nach Herstellung einer Polycarbonat-Polyorganosiloxan- und/oder Polyurethan-Polyorganosiloxan-Polyamino-Verbindung und anschließender Quaternierungsreaktion mit mono- oder polyfunktionellen Quaternierungsmitteln vom Typ ST^{4V}(-Q)ₜ, worin t ≤ 1 ist.

Die erfindungsgemäßen Polycarbonat-Polyorganosiloxan- und/oder Polyurethan-Polyorganosiloxan-Verbindung werden insbesondere auch durch die Umsetzung einer Verbindung der Formel (6) 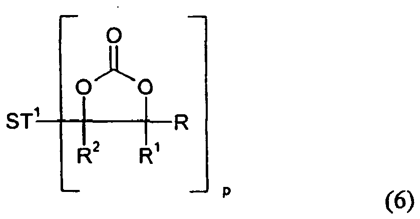 worin R, R¹, R² und ST¹ wie oben definiert sind, und p ≥ 2 ist,
und mindestens einer Verbindung der Formel (7)

ST²(-Y-H)_{q},

worin ST² und Y wie oben definiert sind, und worin q ≥ 2 ist, hergestellt.

Dabei ist Y bevorzugt NR⁶ ist, worin R⁶ wie oben definiert, noch bevorzugter Wasserstoff.

Besonders bevorzugt werden Verbindungen der Formel (4) 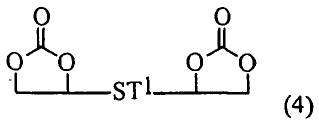 verwendet.

Die Umsetzungen zur Herstellung der erfindwigsgemäßen Polycarbonat-Polyorganosiloxan- und/oder Polyurethan-Polyorganosiloxan-Verbindung werden bevorzugt im Bereich von Raumtemperatur bis 160°C, bevorzugt bis 140°C ausgeführt. Die Reaktionszeiten betragen wenige Minuten bis einige Stunden. Die aminofunktionellen Precursoren sind dabei im Allgemeinen reaktiver als die hydroxyfunktionellen Precursoren.

Reaktionszeiten, Reaktionstemperaturen und der erzielte Umsatz hängen in besonderer Weise vom Typ der Aminogruppen an den HY-Precursoren ab. Generell gilt, dass primäre Aminogruppen leichter reagieren als sekundäre Aminogruppen. Reaktionszeiten, Reaktionstemperaturen und der erzielte Umsatz hängen weiterhin in besonderer Weise vom Typ der quaternierungs- bzw. alkylierungsfähigen Gruppe Q an ST⁴ ab. Generell gilt, dass beispielsweise Halogencarbonsäureestergruppen leichter als vergleichbare Halogenalkylgruppen reagieren.

Es liegt im Rahmen der Erfindung, die gesamte Reaktionssequenz oder einzelne Teilschritte ohne Lösungsmittel oder aber in Gegenwart von Lösungsmitteln auszuführen. Bevorzugte Lösungsmittel sind typische Lacklösungsmittel, wie Methoxypropylacetat, Butylacetat, Toluen. Die Umsetzung in protischen Lösungsmitteln, wie Alkoholen, beispielsweise Ethanol, 2-Propanol, 1-Butanol, 2-Butanol, 1-Methoxy-2-propanol oder höheren Ethylenoxid- bzw. Propylenoxidderivaten kann ebenfalls vorteilhaft sein.

Im Ergebnis der dargestellten Gesamtreaktionssequenz unter Verwendung der Quaternierungsreagenzien werden Polycarbonat-Polyorganosiloxan- und/oder Polyurethan-Polyorganosiloxan-Verbindung mit Amino- und oder Ammoniumgruppen erhalten, die mindestens in einem der Strukturelemente ST¹ oder ST² über Polysiloxaneinheiten verfügen.

Die Erfindung betrifft weiterhin die Verwendung der erfindungsgemäßen Polycarbonat-Polyorganosiloxan- und/oder Polyurethan-Polyorganosiloxan-Verbindungen zur Herstellung von Beschichtungen, Mitteln zur Oberflächenmodifizierung, Elastomeren, Duromeren, Klebstoffen, Primern für Metall- und Kunststoffoberflächen, Polymeradditiven, Waschmitteladditiven, rheologischen Mitteln, kosmetischen Mitteln, Fasermodifizierungsmitteln.

In kosmetischen Formulierungen für Haare können die erfindungsgemäßen Polycarbonat-Polyorganosiloxan- und/oder Polyurethan-Polyorganosiloxan-Verbindungen dabei insbesondere die Funktion von sogenannten Konditionierungsmitteln ("conditioner") ausüben, d.h. insbesondere die Haareigenschaften, wie Weichheit, Glanz, Fülle, Kämmbarkeit etc. günstig beeinflussen, wobei sie insbesondere auch in Kombination mit anderen üblichen Konditionierungsmitteln, wie z.B. Poly-alpha-olefine, fluorierte Öle, fluorierte Wachse, fluorierten Kautschuke, Carbonsäureestern mit mindestens 10 Kohlenstoffatomen, kationische Polymeren, in dem Medium der Formulierung unlösliche oder lösliche Silicone, Mineralöle, pflanzliche Ölen und tierische Ölen und deren Gemische wie beispielsweise in WO 99/009939 beschrieben verwendet werden können.

Die Erfindung betrifft weiterhin bevorzugt die Verwendung der erfindungsgemäßen Polycarbonat-Polyorganosiloxan- und/oder Polyurethan-Polyorganosiloxan-Verbindungen zur Herstellung von Beschichtungen oder Mitteln zur Oberflächenmodifizierung von harten Oberflächen, wie beispielsweise Glas, Keramik, Kacheln, Beton und Stahlteilen, wie Autokarosserien und Schiffskörper.

Weiterhin betrifft die Erfindung bevorzugt die Verwendung der erfindungsgemäßen Polycarbonat-Polyorganosiloxan- und/oder Polyurethan-Polyorganosiloxan-Verbindung zur Herstellung von Primern zur Verbindung von Siliconelastomeren mit anderen Substraten, wie Stahl, Aluminium, Glas, Kunststoffen, wie Epoxidharzen, Polyamiden, Polyphenylensulfiden, Polyestern, wie Polyterephthalaten.

In einer weiteren bevorzugten Ausführungsform der Erfindung betrifft diese die Verwendung die erfindungsgemäßen Polycarbonat-Polyorganosiloxan- und/oder Polyurethan-Polyorganosiloxan-Verbindung zur Herstellung von Modifizierungsmitteln für thermoplastische Kunststoffe, wie Polyolefine, Polyamide, Polyurethane, Poly(meth)acrylate, Polycarbonate.

In einer weiteren bevorzugten Ausführungsform der Erfindung betrifft diese die Verwendung der erfindungsgemäßen Polycarbonat-Polyorganosiloxan- und/oder Polyurethan-Polyorganosiloxan-Verbindung zur Herstellung von Tieftemperaturschlagzäh-Modifikatoren.

Der Ausdruck "zur Herstellung von", wie er vorstehend verwendet wird, schließt dabei auch den Fall ein, dass die erfindungsgemäßen Polycarbonat-Polyorganosiloxan- und/oder Polyurethan-Polyorganosiloxan-Verbindungen allein für die genannte Anwendung verwendet werden. D.h., das beispielsweise die erfindungsgemäßen Polycarbonat-Polyorganosiloxan- und/oder Polyurethan-Polyorganosiloxan-Verbindungen selbst unmittelbar als Tieftemperaturschlagzäh-Modifikatoren verwendet werden können. Sie können aber auch vorher geeignet etwa durch Mischen, Compoundierung, Masterbatch-Herstellung geeignet bereitgestellt werden.

Weiterhin kann man die Polycarbonat-Polyorganosiloxan- und/oder Polyurethan-Polyorganosiloxan-Verbindungen bevorzugt als Bestandteil in Kleb-und Dichtstoffen, als Basismaterial für thermoplastische Elastomere wie beispielsweise Kabelumhüllungen (Kabelmäntel), Schläuche, Dichtungen, Tastaturmatten, für Membranen, wie selektiv gas-durchlässige Membranen verwenden. Eine weitere Verwendung der erfindungsgemäßen Copolymere sind Beschichtungen, wie Antifouling-, Antihaftbeschichtungen, gewebeverträgliche Überzüge, flammgehemmte Überzügen und biokompatible Materialien.

Diese können als Überzugsmittel für Kosmetika, Körperpflegemittel, Lackadditive, Hilfsstoff in Waschmitteln, Entschäumerformulierungen und Textilbearbeitung, zum Modifizieren von Harzen oder zur Bitumenmodifizierung dienen.

Weitere Verwendungen umfassen Verpackungsmaterial für elektronische Bauteile, Isolations- oder Abschirmungsmaterialien, Dichtungsmaterial in Hohlräumen mit Kondensatwasserbildung, wie Flugzeuge, Schiffe, Automobil, Additive für Putz-, Reinigungs-oder Pflegemittel, als Additiv für Körperpflegemittel, als Beschichtungsmaterial für Holz, Papier und Pappe, als Formentrennmittel, als biokompatibles Material in medizinischen Anwendungen wie Kontaktlinsen, als Beschichtungsmaterial für Textilfasern oder textile Gewebe, als Beschichtungsmaterial für Naturstoffe wie z.B. Leder und Pelze, als Material für Membranen und als Material für photoaktive Systeme z. B. für lithographische Verfahren, optische Datensicherung oder optische Datenübertragung.

In einer weiteren bevorzugten Ausführungsform der Erfindung betrifft diese die Verwendung der erfindungsgemäßen Polycarbonat-Polyorganosiloxan- und/oder Polyurethan-Polyorganosiloxan-Verbindungen zur Herstellung von Viskositätsreglern, antistatischen Mitteln, von Mischungskomponenten für Silikonkautschuke, die peroxidisch oder durch Hydrosilylierung (Platin-Katalyse) zu Elastomeren vernetzt werden können, und dort zur Modifizierung von Oberflächeneigenschaften, zur Modifizierung der Diffusion von Gasen, Flüssigkeiten etc. führen, bzw. das Quellverhalten der Silikonelastomere modifizieren, von Weichmachern für Textilfasern zur Behandlung der Textifasem vor, während und nach der Wäsche, von Mitteln zur Modifizierung von natürlichen und synthetischen Fasern, wie beispielsweise Haaren, Baumwollfasern und Synthesefasern, wie Polyesterfasern und Polyamidfasern sowie Mischgeweben, von Textilausrüstungsmitteln, sowie von detergenzienhaltigen Formulierungen, wie Waschmitteln, Reinigungsmitteln.

Die vorliegende Erfindung betrifft weiterhin neue Waschmittelformulierungen, kosmetische Formulierungen, Faserbehandlungsformulierungen, die die erfindungsgemäßen Polycarbonat-Polyorganosiloxan- und/oder Polyurethan-Polyorganosiloxan-Verbindungen enthalten.

So können die erfindungsgemäßen Polycarbonat-Polyorganosiloxan- und/oder Polyurethan-Polyorganosiloxan-Verbindungen beispielsweise in festen oder flüssigen Waschmittelformulierungen in Anteilen von etwa 0,1 bis 10 Gew.-% bezogen auf die Gesamtmenge der Formulierung vorliegen, in kosmetischen Formulierungen und Formulierungen zur Faserbehandlung, wie Textilpflegemitteln, in Anteilen von etwa 0,1 bis 50 Gew.-% bezogen auf die Gesamtmenge der Formulierung vorliegen. Bevorzugt können die erfindungsgemäßen Polycarbonat-Polyorganosiloxan- und/oder Polyurethan-Polyorganosiloxan-Verbindungen zur Behandlung und Ausrüstung von harten Oberflächen, wie Glas, Keramik, Kacheln, Kunststoffoberflächen, Metalloberflächen, Lackoberflächen, speziell Schiffskörpern und Automobilkarosserien, ganz speziell auch in Trocknerformulierungen für die maschinelle Autowäsche, als Kleber bzw. Primer, bevorzugt zur Verbindung von Silicon-Elastomeren mit anderen Substraten, wie Stahl, Aluminium, Glas, Epoxidharz, Polyamid, als Modifikatoren, z.B. Tieftemperaturschlagzäh-Modifikatoren und Polaritäts-Modifikatoren, für kohlenwasserstoffbasierte Polymere und siliconbasierte Elastomersysteme, die auf peroxidischer und Pt-katalysierter Vernetzung beruhen, eingesetzt werden.

Sie können weiterhin zur Behandlung von natürlichen und synthetischen Fasern, beispielsweise Baumwolle, Wolle, polyester- und polyamidbasierten Synthesefasern, speziell in Form von Textilien, in speziellen Mitteln zur Faserbehandlung, insbesondere in anionische, nichtionische und kationische Tenside enthaltenden Waschmittelformulierungen verwendet werden, wobei die erfindungsgemäßen Verbindungen in das Waschmittel direkt eingebaut sein können, separat in den laufenden Waschprozeß oder nach dem Waschprozeß dosiert werden können, und den behandelten Substraten Weichheit, verbesserte Elastizität und verringerte Knitterneigung bei Erhalt einer akzeptablen Hydrophilie verliehen wird.

Sie können ebenfalls als Bestandteil separater Weichmachersysteme, speziell auf Basis kationischer Tenside, nach der Wäsche von Fasern und Textilien, als Bügelhilfe und Mittel zur Verhinderung bzw. Rückgängigmachung von Textilverknitterungen, dienen.

Sie können weiterhin zur Faserausrüstung, speziell zur Erstausrüstung und Behandlung von beispielsweise Baumwolle, Wolle, polyester- und polyamidbasierten Synthesefasern, speziell in Form von Textilien, Papier und Holz genutzt werden.

Sie können weiterhin wie bereits dargelegt vorteilhaft in kosmetischen Systemen zur Behandlung von Haaren und Haut eingesetzt werden.

Besonders bevorzugte Anwendungsgebiete für die erfindungsgemäßen Polycarbonat-Polyorganosiloxan- und/oder Polyurethan-Polyorganosiloxan-Verbindungen sind auch, bevorzugt wässrige, Lösungen, Mischungen, Emulsionen und Mikroemulsionen insbesondere als Basis für kosmetische Formulierungen.

Die erfindungsgemäßen Polycarbonat-Polyorganosiloxan- und/oder Polyurethan-Polyorganosiloxan-Verbindungen können als Reinsubstanz, Lösung, Mischung, Emulsion oder Mikroemulsion in Form von Flüssigkeiten, Cremes oder Pasten als Einsatzstoff für die Herstellung geeigneter, erfindungsgemäßer kosmetischer Formulierungen unterschiedlicher Viskositäten verwendet werden.

Das Verfahren zur Herstellung von Formulierungen der erfindungsgemäßen Polycarbonat-Polyorganosiloxan- und/oder Polyurethan-Polyorganosiloxan-Verbindungen, wie beispielsweise zur Behandlung von Substraten, wie harte oder weiche Substrate, kann beispielsweise aus den folgenden Schritten bestehen:
a) Herstellen einer Vormischung in Form von Lösungen, Mischungen oder Emulsionen mit den erfindungsgemäßen Polycarbonat-Polyorganosiloxan-und/oder Polyurethan-Polyorganosiloxan-Verbindungen und
b) Herstellung einer weiteren Mischung unter Verwendung der Vormischung a) sowie Zusatz gegebenenfalls weiterer Tenside, Hilfsstoffe und anderer Additive oder
c) Zusammenfassen der Schritte a) und b), in dem man das Vermischen der Bestandteile mit Rührern, Dissolvem, Knetern, Pumpen, Mischschnecken, Mischdüsen, Nieder- und Hochdruckemulgiergeräten durchführt.

Die Verfahren werden mit den in der Technik (Ullmann's Enzyklopädie) bekannten Maschinen und Apparaten, wie z. B. jeder Form von Rührern in geeigneten Behältern, Apparaten bzw. Mischgeräten, wie zuvor beschrieben, verwirklicht.

Die direkte Vermischung aller Bestandteile ist möglich. Es wird jedoch die Herstellung einer Vormischung bevorzugt, da sie zur schnelleren und besseren Verteilung führt und zum Teil unumgänglich ist, da die unterschiedlichen Stoffgruppen andernfalls nicht in geeigneter Weise oder nur unter hohem Aufwand miteinander vermischt bzw. emulgiert bzw. dispergiert werden können. Geeignete Vor- bzw. Zwischenmischungen können bevorzugt Mischungen in Form von Lösungen, Pasten, Cremes oder sonstige Formen von Emulsionen oder Dispersionen sein. Besonders bevorzugt ist die Herstellung und Verwendung von Mikroemulsionen mit 10 bis 200 nm mittlerem Partikeldurchmesser in kosmetischen Formulierungen.

Die Formulierungen, die die erfindungsgemäßen Polycarbonat-Polyorganosiloxan-und/oder Polyurethan-Polyorganosiloxan-Verbindungen enthalten, können beispielsweise in verschiedenen Darreichungsformen wie für die Haarbehandlung hergestellt werden. Bevorzugt werden die die erfindungsgemäßen Polycarbonat-Polyorganoiloxan- und/oder Polyurethan-Polyorganosiloxan-Verbindungen enthaltenden Zusammensetzungen als kosmetische Formulierungen zur Behandlung keratinhaltiger Substrate wie z. B. menschliche und tierische Haare oder Haut als alkoholische oder polyalkoholische Lösung oder als Emulsion zur Anwendung gebracht. Abhängig von den verwendeten Rohstoffen, Hilfsstoffen sowie des Mischverfahrens bei der Herstellung, werden klare, trübe und weiße Formulierungen erhalten.

Zur Herstellung von Lösungen und Mischungen, die die erfindungsgemäßen Polycarbonat-Polyorganosiloxan- und/oder Polyurethan-Polyorganosiloxan-Verbindungen enthalten, eignen sich bevorzugt alkoholische und polyalkoholische Lösemittel sowie deren Mischungen mit Wasser, ölartigen Substanzen und übliche Silikone (u.a Polydimethylsiloxane) sowie binäre und ternäre Mischungen von Lösemitteln und/oder ölartigen Substanzen und/oder Silikonen. Besonders bevorzugte Lösemittel sind hierbei Ethanol, Isopropanol, Ethylenglykol und Ethylenglykolether, Polyethylenglykole und deren Ether, Propylenglykol und Propylenglykolether, Polypropylenglykole und deren Ether und Glycerin und deren Mischungen. Besonders bevorzugte ölartige Substanzen sind Mineralölprodukte sowie Öle pflanzlichen, tierischen und synthetischen Ursprungs und deren Mischungen. Besonders bevorzugte Silikone, die von den erfindungsgemäßen Polycarbonat-Polyorganosiloxan- und/oder Polyurethan-Polyorganosiloxan-Verbindungen verschieden sind, wie cyclische und lineare Polydimethylsiloxane und deren Mischungen wie z. B. (nach INCI) Cyclomethicone, Cyclotetrasiloxane, Cyclopentasiloxane, Cyclohexasiloxane, Dimethicone mit einem Viskositätsbereich von 0,65 bis 60.000.000 mPa.s bei 25 °C und Dimethiconol mit einem Viskositätsbereich von 10 bis 60.000.000 mPa.s bei 25 °C.

Bevorzugte Lösungen und Mischungen, die die erfindungsgemäßen Polycarbonat-Polyorganosiloxan- und/oder Polyurelhan-Polyorganosiloxan-Verbindungen, weisen die folgende Zusammensetzung in Gew. %, bezogen auf das Gesamtgewicht der Zusammensetzung, auf:
Lösungen bzw. Mischungen:

| | |
|---|---|
| 0,1 - 99,9 % | erfindungsgemäße Polycarbonat-Polyorganosiloxan-und/oder Polyurethan-Polyorganosiloxan-Verbindungen |
| 0,1-99,9% | Lösemittel und/oder Öl und/oder Silikone, und/oder Wasser |

Zusammensetzungen der Emulsionen der erfindungsgemäßen Polycarbonat-Polyorganosiloxan- und/oder Polyurethan-Polyorganosiloxan-Verbindungen:
Zur Herstellung der Emulsionen werden allgemein Wasser und nichtionische, kationische und amphotere Tenside sowie Tensidmischungen verwendet. Außerdem können Emulsionen Hilfsstoffe wie z. B. anorganische und organische Säuren, Basen und Puffer, Salze, Verdicker, Stabilisatoren für Emulsionen wie z. B. 'Xanthan Gum', Konservierungsmittel, Schaumstabilisatoren, Entschäumer und Lösemittel wie z. B. Alkohole (Ethanol, Isopropanol, Ethylenglykol, Polyethylenglykol, Propylenglykol, Polypropylenglykol, Glykolether und Glycerin und deren Mischungen) enthalten.

Die erfindungsgemäßen Polycarbonat-Polyorganosiloxan- und/oder Polyurethan-Polyorganosiloxan-Verbindungen, die in den Emulsionen verwendet werden, können bei der Herstellung von Emulsionen auch selbst als Emulgator dienen.

Eine bevorzugte Emulsion, die bevorzugt zur Herstellung von kosmetischen Formulierungen verwendet werden kann, besteht beispielsweise aus folgenden Bestandteilen in Gew.-%, bezogen auf die Gesamtmenge der Zusammensetzung:

| | |
|---|---|
| 10 - 50% | erfindungsgemäße Polycarbonat-Polyorganosiloxan-und/oder Polyurethan-Polyorganosiloxan-Verbindungen, |
| 1 - 35% | Tenside, |
| 0 - 10 % | Hilfsstoffe, |
| 0 - 20 % | Lösungsmittel, |
| auf 100 % | ergänzt durch Wasser. |

Mikroemulsionen für kosmetische Formulierungen, die Ausrüstung von Textilien und anderen faserförmigen Substraten oder die Beschichtung harter Oberflächen:
Besonders bevorzugt ist die Herstellung von Mikroemulsionen mit einem hohen Aktivgehalt an erfindungsgemäßen Polycarbonat-Polyorganosiloxan- und/oder Polyurethan-Polyorganosiloxan-Verbindungen, da diese neben der Möglichkeit zur Herstellung klarer kosmetischer Formulierungen zusätzlich den Vorteil der prozesstechnisch einfachen Einarbeitung ("Cold Process") in wässerige Formulierungen bieten. Es besteht die Möglichkeit, die erfindungsgemäßen Polycarbonat-Polyorganosiloxan- und/oder Polyurethan-Polyorganosiloxan-Verbindungen bei der Herstellung von Mikroemulsionen in Form der weiter oben beschriebenen Lösungen und Mischungen einzusetzen. Ein bevorzugter Aktivgehalt der erfindungsgemäßen Polycarbonat-Polyorganosiloxan- und/oder Polyurethan-Polyorganosiloxan-Verbindungen in der Emulsion liegt zwischen 5 und 60 Gew.-%, besonders bevorzugt sind 10-50 Gew.-% bezogen auf die Gesamtmenge der Zusammensetzung.

Eine ganz speziell bevorzugte Mikroemulsion besteht aus folgenden, die Erfindung jedoch nicht limitierenden Bestandteilen in Gew.-% bezogen auf die Gesamtmenge der Mikroemulsion:

| | |
|---|---|
| 20 - 80% | erfindungsgemäße Polycarbonat-Polyorganosiloxan-und/oder Polyurethan-Polyorganosiloxan-Verbindungen |
| 0 - 35% | Tenside |
| 0 - 10% | Hilfsstoffe |
| 0 - 20% | Lösungsmittel |
| auf 100% | ergänzt durch Wasser. |

Ein weiterer Gegenstand der Erfindung ist die Verwendung der mit den erfindungsgemäßen Polycarbonat-Polyorganosiloxan- und/oder Polyurethan-Polyorganosiloxan-Verbindungen hergestellten Lösungen, Mischungen bzw. Emulsionen in einer kosmetischen Formulierung.

Diese kosmetischen Formulierungen werden unter Verwendung der zuvor gefertigten Lösungen oder Emulsionen hergestellt, sie können aber auch direkt aus den Einzelbestandteilen erzeugt werden.

### Kosmetische Formulierungen:

Kosmetische Formulierungen schließen beispielsweise ein:
Sogenannte "Rinse-off"-Produkte wie z.B. "2-in-1"-Shampoos, "Body Wash" und Haarspülungen zur Behandlung von Haar während und nach der Reinigung oder nach dem Färben oder der Behandlung von Haar vor der Bleichung, der Lockung oder Entkräuselung, sowie sogenannte "Leave-in"-Produkte wie Haarkuren, Pflegecremes, Frisiercremes, Haargele, Haarstylingprodukte, Haarfestiger, Haarsprays, Pumpsprays, Fönwellmittel und Fönfestiger. Darüber hinaus umfassen die Formulierungen ebenfalls Haarfärbemittel, die je nach Waschbeständigkeit des erzielten Farbergebnisses in 3 Typen - permanente, semipermanente und temporäre Haarfärbemittel - unterschieden werden können. Der Begriff Haare beinhaltet hierbei alle keratinhaltigen Fasern, inbesondere aber menschliches Haar. Die Haarfärbemittel enthalten beispielsweise neben den erfindungsgemäßen Polycarbonat-Polyorganosiloxan- und/oder Polyurethan-Polyorganosiloxan-Verbindungen übliche Silikone, Tenside, Hilfsstoffe und Färbemittel. Jeder dieser Inhaltsstoffe kann entweder allein oder in Kombination mit weiteren Inhaltsstoffen verwendet werden und steht für zusätzliche Funktionen in den Formulierungen, die zur Erhöhung des Volumens, der Kämmbarkeit und des Glanzes sowie der Verminderung des Auswaschens der Farbe von und aus gefärbten keratinhaltigen Substraten wie z.B. menschlichem und tierischem Haar dienen und mindestens eine erfindungsgemäße Polyurethan- und Polyester-Polysiloxan-Verbindung enthalten.

Die im Zusammenhang mit den kosmetischen Formulierungen erwähnte Abkürzungen werden im INCI (The Cosmetic, Toiletry and Fragrance Association Washington DC) erklärt.

Die neben den erfindungsgemäßen Polycarbonat-Polyorganosiloxan- und/oder Polyurethan-Polyorganosiloxan-Verbindungen hierbei umfassten Silikone, schließen beispielsweise ein:
Cyclische, lineare und verzweigte Polydimethylsiloxane mit einer Viskosität von 0,65 - 200.000.000 mPa.s bei 25°C sowie deren Mischungen wie z.B. Octaorganocyclotetrasiloxane, Octamethylcyclotetrasiloxane, Decaorganocyclopentasiloxane, Dodecaorganocyclohexasiloxane, wobei der organische Rest bevorzugt Methyl bedeutet, wie SF 1173, SF 1202, SF 1217, SF 1204 und SF 1258 von GE Bayer Silicones, Dimethicone wie die Baysilone M Öle (M3 bis M 2.000.000), SE 30, SF 1214, SF 1236, SF 1276 und CF 1251 von Momentive Performance Materials und Dimethiconole wie Baysilone, Abhäsive ZWTR/OH, d.h. SiOH-endgestoppte Polydimethylsiloxane 2-20 kPa.s von Momentive Performance Materials und DC 1501 und DC 1503 von Dow Corning.

Der Einsatz der oben beschriebenen Polydimethylsiloxane in Form von nicht-ionischen, anionischen und kationischen Emulsionen wie z.B. SM 2169, SM 2785, SM 555, SM 2167 und SM 2112 von Momentive Performance Materials in Kombination mit Emulsionen der erfindungsgemäßen Polycarbonat-Polyorganosiloxan- und/oder Polyurethan-Polyorganosiloxan-Verbindungen und/oder der Einsatz von Mischungen und Lösungen der oben beschriebenen Polydimethylsiloxane mit den erfindungsgemäßen Polycarbonat-Polyorganosiloxan- und/oder Polyurethan-Polyorganosiloxan-Verbindungen ist hierbei besonders bevorzugt, da sich aus diesen Kombinationen besondere Eigenschaften von Haarpflegeprodukten ableiten lassen, wie das für bisher bekannte amino-funktionelle Silikone bereits umfangreich in der Literatur beschrieben wurde (WO 99/44565, WO 99/44567, WO 99/49836, WO 99/53889, WO 97/12594, US 6,028,031, EP 0811371, WO 98/18443, WO 98/43599 und US 2002-0182161).

Ebenfalls geeignet sind feste Silikone, sogenannte MQ-Harze, wie z.B. SR 1000 von Momentive Performance Materials und deren Lösungen in Lösungsmitteln wie den oben genannten Silikonen und aliphatischen Lösungsmitteln wie z.B. Isododekan. Ebenfalls geeignet sind organofunktionelle Silikone, wie Alkyl-, Aryl-, Arylalkyl-, Phenyl-, Fluoralkyl-, und Polyether-modifizierte Silikone wie die Typen SF 1632, SF 1642, SF 1555, Baysilone CF 1301, Baysilone PK 20, FF 157, SF 1188A, SF 1288 und SF 1388 von Momentive Performance Materials.

### Tenside:

Tenside als Inhaltstoffe kosmetischer Formulierungen werden beschrieben in A. Domsch: Die kosmetischen Präparate, Verlag für Chem. Industrie, 4. Auflage, 1992, im Kosmetikjahrbuch 1995, Verlag für chemische Industrie, 1995, und H. Stache, Tensidtaschenbuch, 2. Auflage, Carl Hanser Verlag, 1981.

### Anionische Tenside:

Exemplarisch jedoch nicht limitierend sind folgende anionische Tenside als Bestandteil der Formulierungen geeignet:
Alkylsulfate, Alkylethersulfate, Alkarylsulfate, Olefinsulfonate, Alkylamidethersulfate, Acylisothionate, Acylglutamate, Alkylethercarboxylate, Methyltauride und Tauride, Sarkoside, Sulfosuccinate, Eiweiß-Fettsäure-Kondensate, Alkylphosphate und Alkyletherphosphate. Hierbei können die freien Säuren sowie deren Alkalimetallsalze, Magnesium-, Ammonium- und Mono-, Di- und Triethanolaminsalze verwendet werden.

Die Alkyl und Acylgruppen enthalten typischerweise 8-18 C-Atome und können ungesättigt sein. Die Alkylthersulfate, Alkylamidethersulfate, Alkylethercarboxylate und Alkyletherphosphate können 1-10 Ethylenoxid- oder Propylenoxid- oder eine Kombination aus Ethylenoxid- und Propylenoxideinheiten enthalten.

### Amphotere Tenside:

Exemplarisch jedoch nicht limitierend sind folgende amphotere Tenside als Bestandteil der Formulierungen geeignet:
Alkylbetaine, Alkylamidobetaine, Sulfobetaine, Acetate und Diacetate, Imidazoline, Propionate und Alkylaminoxide.

Die Alkyl- und Acylgruppen enthalten hierbei 8-19 C-Atome.

### Nichtionische Tenside:

Exemplarisch jedoch nicht limitierend sind folgende nichtionische Tenside als Bestandteil der Formulierungen geeignet:
Alkylethoxylate, Arylethoxylate, ethoxylierte Ester, Polyglykolamide, Polysorbate, Glycerin-Fettsäure-Ethoxylate, Alkylphenolpolyglykolether und Zuckertenside wie z.B. Alkylglycoside.

### Kationische Tenside:

Bei kationischen Tensiden wird unterschieden zwischen reinen kationischen Tensiden und kationischen Polymeren.

### Reine kationische Tenside:

Exemplarisch jedoch nicht limitierend sind folgende nichtionische Tenside als Bestandteil der Formulierungen geeignet:
Monoalkylquats, Dialkylquats, Trialkylquats, Tetraalkylquats, Benzylammoniumsalze, Pyridinsalze, Alkanolammoniumsalze, Imidazolinsalze, Oxazolinsalze, Thiazolinsalze, Salze von Aminoxiden, Sulfonsalze, wobei der Begriff "quat" das Vorliegen mindestens einer quaternären Ammoniumgruppe impliziert.

### Kationische Polymere:

Insbesondere für "2-in-1"-Shampoos werden neben den reinen kationischen Tensiden auch kationisch modifizierte Polymere eingesetzt. Eine umfassende Beschreibung dieser Polymere liefern US 5,977,038 und WO 01-41720 A1. Bevorzugt sind hierbei kationische Polyacrylamide, kationische Eiweißderivate, Hydroxyalkylcelluloseether und kationische Guar Derivate. Besonders bevorzugt sind kationische Guar Derivate mit dem CTFA Namen Guar Hydroxypropyltrimonium Chloride. Diese Typen sind erhältlich unter den Handelsnamen Cosmedia Guar C 261 (Henkel), Diagum P 5070 (Diamalt), Jaguar C-Typen und Jaguar EXCEL von Rhodia.

### Hilfsstoffe:

Hilfsstoffe als Inhaltstoffe insbesondere von kosmetischen Formulierungen werden beschrieben in: A. Domsch, Die kosmetischen Präparate, Verlag für Chem. Industrie, 4. Auflage, 1992; und in: Kosmetikjahrbuch 1995, Verlag für chemische Industrie, 1995.

Exemplarisch jedoch nicht limitierend sind folgende Hilfsstoffe als Bestandteil der Formulierungen geeignet:
Anorganische und organische Säuren, Basen und Puffer, Salze, Alkohole wie z.B. Ethanol, Isopropanol, Ethylenglykol, Polyethylenglykol, Propylenglykol, Polypropylenglykol, Glykolether und Glycerin, Verdicker, Stabilisatoren für Emulsionen wie z. B. Xanthan Gum, Rückfetter, Konservierungsmittel, Schaumstabilisatoren, Entschäumer, Perlglanz und Trübungsmittel wie z.B. Glykoldistearate und Titandioxid, Kollagenhydrolysat, Keratinhydrolysat, Seidenhydrolysat, Antischuppenwirkstoffe wie z.B. Zinkpyrithion, Salicylsäure, Selendisulfid, Schwefel und Teerpräparate, polymere Emulgatoren, Vitamine, Farbstoffe, UV Filter, Bentonite, Parfumöle, Duftstoffe, Styling Polymere, Feuchtigkeitsspender, Pflanzenextrakte und weitere natürliche oder naturidentische Rohstoffe.

Es ist bekannt, dass durch den Zusatz von öl- und wasserlöslichen UV-Filtern (Lichtschutzmittel) oder Kombinationen von UV-Filtern in kosmetischen Formulierungen zur Pflege und Behandlung von keratinhaltigen Substraten wie menschliches und tierisches Haar der Abbau von Farbstoffen und somit das Ausbleichen und Verblaßen von gefärbten keratinhaltigen Substraten durch UV-Strahlung entscheidend vermindert oder sogar gänzlich verhindert werden kann.

### Inhaltsstoffe für Haarfärbemittel:

Farbstoffe und andere Inhaltsstoffe von Haarfärbemitteln werden beschrieben in: A. Domsch, Die kosmetischen Präparate, Verlag für chem. Industrie, 4. Auflage, 1992. Farbstoffe werden beschrieben in: Verordnung über Kosmetische Mittel (Kosmetik Verordnung), Bundesgesetzblatt 1997, Teil I S.2412, §3 und Anlage 3 und in European Community (EC) Directive, 76/68/EEC, Annex IV.

Im Folgenden werden Haarfärbemittel unterschieden in permanente, semipermanente und temporäre Haarfärbemittel.

### Permanente Haarfärbemittel:

Dauerhafte Färbungen die auch durch mehrere Haarwäschen (mehr als 10) nicht ausgewaschen werden entstehen durch chemische Reaktion zwischen Farbstoffvorprodukten unter oxidative Bedingungen durch Wasserstoffperoxid. Hierbei bestimmt die Mischung der entsprechenden Komponenten das erzielbare Farbergebnis.

Man unterscheidet bei den Vorprodukten zwischen Oxidationsbasen (Entwickler) und Kupplungskomponenten (Modifizierer).

### Oxidationsbasen:

Exemplarisch jedoch nicht limitierend sind folgende Oxidationsbasen als Bestandteil der Formulierungen geeignet:
m- und p-Phenylendiamine (Diaminobenzole), deren N-substituierte Derivate und Salze, N-substituierte Derivate des o-Phenylendiamins, o-, m- und p-Toluylendiamine (Methyl-diaminobenzole), deren N-substituierte Derivate und Salze, p-Aminodiphenylamin, -hydrochlorid und -sulfat, o-, m- und p-Aminophenol und -hydrochlorid, 2,4-Diaminoisosulfat (4-Methoxy-m-phenylendiaminsulfat), o-Chlor-p-phenylendiaminsulfat, Pikraminsäure (2,4-Dinitro-6-aminophenol) und 2,4-Dinitro-1-naphtol-sulfonsäure sowie deren Natriumsalz.

### Kupplungskomponenten:

Exemplarisch jedoch nicht limitierend sind folgende Kupplungskomponenten als Bestandteil der Formulierungen geeignet:
Hydrochinon (1,4-Dihydroxybenzol), Resorcin (1,3-Dihydroxybenzol), Brenzcatechin (1,2-Dihydroxybenzol), α-Naphtol (1-Hydroxynaphtalin), Pyrogallol (1,2,3-Trihydroxybenzol) und 2,6-Diaminopyridin.

Üblicherweise werden Oxidationsbasen und Kupplungskomponenten mit Tensiden in Öl-in-Wasser Emulsionen eingearbeitet, jedoch sind auch einfache Lösungen oder Shampoos als Formulierungen bekannt. Die Formulierungen enthalten darüber hinaus Antioxidantien wie z.B. Natriumsulfit, Natriumdithionit, Ascorbinsäure oder Thioglykolsäure zur Stabilisierung der Vorstufen und werden mit alkalischen Substanzen wie z.B. Ammoniak auf einen pH wert zwischen 8 und 12 (bevorzugt 9-11) eingestellt. Außerdem werden Tenside als Netzmittel, Komplexbildner für Schwermetalle, Duftstoffe zum Überdecken des Ammoniakgeruchs, Conditioner zum Verbessern des Haargefühls und zum Schutz des Haares und Lösungsmittel wie Ethanol, Ethylenglykol, Glycerin oder Benzylalkohol zugesetzt.

Typischerweise werden permanente Haarfärbemittel als 2 Komponentensyteme angeboten bestehend aus Farblösung, -creme oder -shampoo die oben beschrieben ist und aus der Entwicklerlösung. Die Entwicklerlösung enthält hierbei zwischen 6-12 % Wasserstoffperoxid und kann optional auch mit Bestandteilen der die Farbkomponenten enthaltenden Formulierung versetzt werden. Die Peroxidlösung muß hierbei jedoch sorgfältig stabilisiert sein.

### Semipermanente Haarfärbemittel:

Semipermanente Färbungen wurden entwickelt, um die Färbung für 6-10 malige Wäsche mit Shampoo aufrecht zu erhalten. Hierbei werden sogenannte direktziehende Farbstoffe verwendet, die im Wesentlichen der Gruppe der Nitro-, Azo- und Anthrachinonfarbstoffe gehören. Diese Farbstoffe sind klein genug, um in das Haar zu penetrieren. Typischerweise eingesetzte Formulierungen sind Lösungen, Cremes, Shampoos oder auch Aerosolschäume. Die Zusammensetzung ist vergleichbar mit den die Farbkomponente enthaltenden Formulierungen die als permanente Haarfärbungen werden.

### Temporäre Haarfärbemittel:

Temporäre Färbungen, auch Tönungen genannt, enthalten im Unterschied zu den semipermanenten Haarfärbemitteln größere Farbstoffmoleküle, die nicht in der Lage sind in das Haar einzudringen. Sie wurden entwickelt, um die Färbung für 1-6 Wäschen aufrecht zu erhalten. Typischerweise werden hier Azo- und basische Farbstoffe sowie, Azin- und Thiazinderivate eingesetzt. Für die Zusammensetzung der Formulierungen gilt das bei den semipermanenten und permanenten Haarfärbemitteln gesagte. Farbstoffe und andere Inhaltsstoffe von Haarfärbemitteln werden beschrieben in: A. Domsch, Die kosmetischen Präparate, Verlag für chem. Industrie, 4. Auflage, 1992. Farbstoffe werden beschrieben in: Verordnung über Kosmetische Mittel (Kosmetik Verordnung), Bundesgesetzblatt 1997, Teil I S. 2412, § 3 und Anlage 3 und in European Community (EC) Directive, 76/68/EEC, Annex IV.

Als besonders vorteilhaft für die Verwendung von die erfindungsgemäßen Polycarbonat-Polyorganosiloxan- und/oder Polyurethan-Polyorganosiloxan-Verbindungen enthaltenden Mischungen in kosmetischen Formulierungen wurden die folgenden, die Erfindung jedoch nicht limitierende Rezepturen gefunden, in denen jeder funktionelle Wirkstoff als einzelne Verbindung oder als Gemisch mehrerer Verbindungen dieser Kategorie auftreten kann.

Eine typische, erfindungsgemäße, die Erfindung jedoch nicht limitierende Shampoo-Formulierung zur Pflege und Konditionierung von Haaren besteht aus folgenden Bestandteilen in Gew.-%, jeweils bezogen auf die Gesamtformulierung:

| | |
|---|---|
| 0,01-10 % | erfindungsgemäße Polycarbonat-Polyorganosiloaan- und/oder Polyurethan-Polyorganosiloxan-Verbindungen |
| 2-15 % | Anionisches Tensid |
| 0-10 % | Amphoteres Tensid |
| 0-15 % | Nichtionisches Tensid |
| 0-10 % | Kationisches Tensid |
| 0-10 % | Silikone Konditioniermittel (Co-Adjuvantien) |
| 0-10 % | Hilfsstoffe |
| auf 100 % | ergänzt durch Wasser. |

Eine spezielle, die Erfindung jedoch nicht limitierende Shampoo-Formulierung besteht aus folgenden Bestandteilen in Gew.-%:

| | |
|---|---|
| 0,1-12 % | erfindungsgemäße Polycarbonat-Polyorganosiloxan- und/oder Polyurethan-Polyorganosiloxan-Verbindungen |
| 1 - 35 % | Natrium oder Ammonium Lauryl- bzw. Laurethsulfat (20 - 30%) |
| 1-6 % | Cocoamidopropylbetain (25 - 35%) |
| 0 - 3 % | Guar Hydroxypropyltrimonium Chlorid |
| 0 - 5 % | Polyquaternium- 10 |
| 0 - 12 % | Silikone Konditioniermittel (Co-Adjuvantien) |
| 0,01 - 1% | Dinatrium EDTA |
| 0,01 - 1% | Phenoxyethynol (und) Methylparaben (und) Butylparaben (und) Ethylparaben (und) Propylparaben |
| 0-1 % | Parfum (Duftstoff) |
| 0-1 % | Farbstoffe |
| 0 -1 % | Zitronensäure |
| 0-2 % | Natriumchlorid |
| auf 100 % | ergänzt durch Wasser. |

Eine typische, erfindungsgemäße, die Erfindung jedoch nicht limitierende Haarspülung zur Pflege und Konditionierung von Haaren besteht aus folgenden Bestandteilen in Gew.-%:

| | |
|---|---|
| 0,1-15 % | erfindungsgemäße Polycarbonat-Polyorganosiloxan- und/oder Polyurethan-Polyorganosiloxan-Verbindungen |
| 0-10 % | Amphoteres Tensid |
| 0,1 - 15 % | Nichtionisches Tensid |
| 0-10 % | Kationisches Tensid |
| 0-15 % | Silikone Konditioniermittel (Co-Adjuvantien) |
| 0 - 20 % | Hilfsstoffe |
| auf 100 % ergänzt | durch Wasser. |

Eine spezielle, die Erfindung jedoch nicht limitierende Zusammensetzung einer Haarspülung besteht aus folgenden Bestandteilen in Gew.-%:

| | |
|---|---|
| 0,5-15% | erfindungsgemäße Polycarbonat-Polyorganosiloxan- und/oder Polyurethan-Polyorganosiloxan-Verbindungen (als 43,5%-ige Emulsion in Wasser mit nichtionischen Emulgatoren) |
| 0- 15 % | Silikone Konditioniermittel (Co-Adjuvantien) |
| 0-10 % | Cetrimonium Chlorid (25 - 35%) |
| 0-3 % | Guar Hydroxypropyltrimonium Chlorid |
| 1-10 % | Cetearyl Alkohol |
| 0-10 % | Glycerin |
| 0,01 -1% | Phenoxyethynol (und) Methylparaben (und) Butylparaben (und) Ethylparaben (und) Propylparaben |
| 0 -1 % | Parfum (Duftstoff) |
| 0 - 1 % | Farbstoffe |
| 0 - 1 % | Zitronensäure |
| auf 100 % | ergänzt durch Wasser. |

Eine typische, erfindungsgemäße, die Erfindung jedoch nicht limitierende Haarpflege-Kur zur Pflege und Konditionierung von Haaren besteht aus folgenden Bestandteilen in Gew.-%:

| | |
|---|---|
| 0,4 - 20 % | erfindungsgemäße Polycarbonat-Polyorganosiloxan- und/oder Polyurethan-Polyorganosiloxan-Verbindungen |
| 0-15 % | Nichtionisches Tensid |
| 0 - 10 % | Kationisches Tensid |
| 0 - 20 % | Silikone Konditioniermittel (Co-Adjuvantien) |
| 0 - 20 % | Hilfsstoffe |
| auf 100 % | ergänzt durch Wasser. |

Eine spezielle, die Erfindung jedoch nicht limitierende Haarpflege-Kur, besteht aus folgenden Bestandteilen in Gew.-%:

| | |
|---|---|
| 1 - 20 % | erfindungsgemäße Polycarbonat-Polyorganosiloxan- und/oder Polyurethan-Polyorganosiloxan-Verbindungen (als 43,5%-ige Emulsion in Wasser mit nichtionischen Emulgatoren) |
| 0,5 - 10 % | Stearyl Alcohol (und) Steareth-7 (und) Steareth-10 |
| 0 - 20 % | Silikone Konditioniermittel (Co-Adjuvantien) |
| 0 - 10 % | Cetrimonium Chlorid (25 - 35%) |
| 0 - 3 % | Guar Hydroxypropyltrimonium Chlorid |
| 0 - 5 % | Dimethicone |
| 0 - 5 % | Paraffinöl |
| 1 - 10 % | Stearyl Alkohol |
| 0 - 10 % | Glycerin |
| 0,01- 1% | Phenoxyethynol (und) Methylparaben (und) Butylparaben (und) Ethylparaben (und) Propylparaben |
| 0 -1 % | Parfum (Duftstoff) |
| 0 - 1 % | Farbstoffe |
| 0-1 % | Zitronensäure |
| 0-2 % | Natriumchlorid |
| auf 100 % | ergänzt durch Wasser. |

Eine ganz spezielle, die Erfindung jedoch nicht limitierende Haarpflege Kur, besteht aus folgenden Bestandteilen in Gew.-%:

| | |
|---|---|
| 2-5 % | erfindungsgemäße Polycarbonat-Polyorganosiloxan- und/oder Polyurethan-Polyorganosiloxan-Verbindungen (als 43,5%-ige Emulsion in Wasser mit nichtionischen Emulgatoren) |
| 0-5 % | Silikone Konditioniermittel (Co-Adjuvantien) |
| 0-2 % | Cetrimonium Chlorid (25-35 %) |
| 0,5 - 5% | Glycerin |
| 0,25 - 2,5 % | Propylenglykol |
| 0,05 - 0,2 % | Parfüm |
| 0,1-0,5 % | Polysorbat 20 |
| auf 100 % | ergänzt durch Wasser. |

Eine typische, erfindungsgemäße, die Erfindung jedoch nicht limitierende die Farbstoffe enthaltende Formulierung zur temporären, semi-permanenten oder permanenten Haarfärbung Pflege und Konditionierung der Haare besteht aus folgenden Bestandteilen in Gew.-%:

| | |
|---|---|
| 0,1 - 10 % | erfindungsgemäße Polycarbonat-Polyorganosiloxan-und/oder Polyurethan-Polyorganosiloxan-Verbindungen |
| 1 - 10 % | Haarfarbstoffvorstufen oder Farbstoffe je nach gewünschter Haarfarbe |
| 0 - 15% | Anionisches Tensid |
| 0 - 10 % | Amphoteres Tensid |
| 0 - 10 % | Nichtionisches Tensid |
| 0 - 10 % | Kationisches Tensid |
| 0 - 1 % | Natriumsulfit |
| 0 - 5 % | Puffer |
| 0 - 10 % | Silikone Konditioniermittel (Co-Adjuvantien) |
| 0 - 10 % | Hilfsstoffe |
| auf 100% | Wasser. |

Eine spezielle, erfindungsgemäße, die Erfindung jedoch nicht limitierende Farbcreme für die permanente Haarfärbung besteht aus folgenden Bestandteilen in Gew.%:

| | |
|---|---|
| 0,1 - 10 % | erfindungsgemäße Polycarbonat-Polyorganosiloxan- und/oder Polyurethan-Polyorganosiloxan-Verbindungen (als 20 %-ige Emulsion in Wasser mit nichtionischen Emulgatoren) |
| 1 - 5 % | Haarfarbvorstufen oder Farbstoffe je nach gewünschter Haarfarbe |
| 2 - 15 % | Anionisches Tensid |
| 0 - 10 % | Amphoteres Tensid |
| 0 - 10 % | Nichtionisches Tensid |
| 0 - 10 % | Kationisches Tensid |
| 0,1 - 1 % | Natriumsulfit |
| 0,1-5% | Puffer für pH = 8 - 12 |
| 0 - 10 % | Silikone Konditioniermittel (Co-Adjuvantien) |
| 0 - 10 % | Hilfsstoffe |
| auf 100 % | Wasser. |

Eine spezielle, erfindungsgemäße, die Erfindung jedoch nicht limitierende Farblösung für die permanente Haarfärbung besteht aus folgenden Bestandteilen in Gew.-%:

| | |
|---|---|
| 0,1 - 10 % | erfindungsgemäße Polycarbonat-Polyorganosiloxan- und/oder Polyurethan-Polyorganosiloxan-Verbindungen (als 20 %-ige Emulsion in Wasser mit nicht-ionischen Emulgatoren) |
| 1 - 5 % | Haarfarbvorstufen oder Farbstoffe je nachgewünschter Haarfarbe |
| 0,1 - 1 % | Natriumsulfit |
| 5 - 15 % | Propylenglykol |
| 5 - 15 % | Ammoniak (28'%) |
| 10 - 30 % | Ölsäure |
| 5 - 15 % | Isopropanol |
| | 10 - 30 % Alkanolamid |
| 0- 10 % | Silikone Konditioniermittel (Co-Adjuvantien) |
| auf 100 % | Wasser. |

Eine typische, erfindungsgemäße, die Erfindung jedoch nicht limitierende Entwicklerformulierung für die permanente Haarfärbung besteht aus folgenden Bestandteilen in Gew.-%:

| | |
|---|---|
| 0,1 - 10 % | erfindungsgemäße Polycarbonat-Polyorganosiloxan- und/oder Polyurethan-Polyorganosiloxan-Verbindungen |
| | 10 - 30 % Wasserstoffperoxid (30 %) |
| 0 - 15 % | Anionisches Tensid |
| 0 - 10 % | Amphoteres Tensid |
| 0 - 10 % | Nichtionisches Tensid |
| 0 - 10 % | Kationisches Tensid |
| 0 - 5 % | Puffer bzw. Säure für pH = 2 - 6 |
| 0 - 10 % | Silikone-Konditioniermittel (Co-Adjuvantien) |
| 0 - 10 % | Hilfsstoffe |
| auf 100 % | Wasser |

Eine spezielle, erfindungsgemäße, die Erfindung jedoch nicht limitierende Entwickler Creme für eine permanente Haarfärbung besteht aus folgenden Bestandteilen in Gew.-%:

| | |
|---|---|
| 0,1 - 5 % | erfindungsgemäße Polycarbonat-Polyorganosiloxan- und/oder Polyurethan-Polyorganosiloxan-Verbindungen (als 20 %-ige Emulsion in Wasser mit nichtionischen Emulgatoren) |
| 10 - 30 % | Wasserstoffperoxid (30 %) |
| 0 - 5 % | Silikon-Konditioniermittel (Co-Adjuvantien) |
| 1- 10 % | Cetearyl Alkohol |
| 0,5 - 5 % | Trideceth-2 Carboxamid MEA |
| 0,5 - 5 % | Ceteareth-30 |
| 0,5 - 5 % | Glycerin |
| 0,05 - 2 % | Pentasodium Pentetate (Pentanatrium Diethylentriaminpentaacetat |
| 0,05 - 2 % | Natriumstannat |
| 0,05 - 2 % | Tetranatriumpyrophosphat |
| auf 100 % | Wasser. |

Es wurde hierbei erkannt, dass sich die erfindungsmäßen Lösungen oder Mischungen vorzugsweise zur Herstellung von kosmetischen Formulierungen eignen, wie für die Behandlung, Konditionierung, Reinigung und/oder Pflege gefärbter oder zu färbender Substrate.

D.h. die mindestens eine erfindungsgemäße Polycarbonat-Polyorganosiloxan- und/oder Polyurethan-Polyorganosiloxan-Verbindung enthaltenden Formulierungen können insbesondere für die Reinigung, Pflege und Konditionierung von faserartigen oder flächigen Substraten eingesetzt werden und wenn diese gefärbt sind und deren Farbeindruck weitestgehend erhalten bleiben soll.

Die mindestens eine erfindungsgemäße Polycarbonat-Polyorganosiloxan- und/oder Polyurethan-Polyorganosiloxan-Verbindung enthaltenden Formulierungen können weiterhin für die Reinigung, Pflege und die Behandlung und die Konditionierung keratinhaltiger Substrate dienen, da sie als Reinigungsmittel für Wolle, zur Wäsche und/oder Erhöhung des Volumens und/oder der Kämmbarkeit und/oder des Glanzes und/oder zur Verminderung des Auswaschens der Farbe von und aus gefärbten oder von gleichzeitig zu färbenden keratinhaltigen Substraten wie z.B. menschlichem und tierischem Haar geeignet sind.

Weiterhin können die mindestens eine erfindungsgemäße Polycarbonat-Polyorgano-siloxan- und/oder Polyurethan-Polyorganosiloxan-Verbindungen enthaltenden Formulierungen insbesondere für die Reinigung, Pflege und die Behandlung, Reinigung und Pflege keratinhaltiger Fasern bzw. Haare vor, während und/oder nach dem Färbevorgang verwendet werden, da die hiermit formulierten Haarfärbemittel gleichzeitig zur Verbesserung der Weichheit und/oder zur Verhinderung der Nass- und Trockenkämmkräfte und/oder zur Erhöhung des Glanzes und/oder zur Erhöhung des Haarvolumens und/oder zur Verminderung des Auswaschens von Farbstoffen von und aus getönten und gefärbten Haaren führen.

### Weichspülerformulierungen

Hinsichtlich der Darrreichungsform ist es einerseits möglich, die erfindungsgemäßen Polycarbonat-Polyorganosiloxan- und/oder Polyurethan-Polyorganosiloxan-Verbindungen in nicht transparente Weichspülerdispersionen oder Weichspüleremulsionen bzw. transparente Microemulsionen oder Lösungen einzuarbeiten.

Typische weitere Komponenten für derartige nicht transparente oder transparente Formulierungen sind:
- quaternäre Ammoniumverbindungen, bevorzugt Alkansäureestereinheiten enthaltende quaternäre Ammoniumverbindungen als Weichmacher,
- organische Lösungsmittel, bevorzugt ein und mehrwertige Alkohole, wie Ethanol, 2-Propanol, Ethylenglykol, 1,2-Propylenglykol, Hexylenglykol, Dipropylenglykol, Ester und Ether von Glykolen und Oligoglykolen, wie Dipropylenglykolmonobutylether, Tripropylenmonomethylether, Diethylenglykoldiacetat, zur Verbesserung der Löslichkeit und Transparenz der Formulierung,
- Diole und höhere Alkohole längerkettiger Kohlenwasserstoffe, beispielsweise 2,2,4-Trimethyl-1,3-Pentandiol, zur Steigerung der Solubilisierbarkeit der Weichmacherkomponenten,
- nichtionogene Tenside, bevorzugt Alkoxylate von verzweigten bzw. unverzweigten C8 bis C40-Alkoholen und Fettsäureester von Alkylenoxiden zur Emulsionsstabilisierung bzw. Microemulsionsherstellung
   - Parfüms
   - Viskositätsregler
   - Farbstoffe
   - Konservierungsmittel.

Die aufgeführten zusätzlichen Funktionalkomponenten und bevorzugte Vertreter sind beispielsweise aus US 6,376,455 bekannt.

Andererseits ist es möglich, die erfindungsgemäßen Polycarbonat-Polyorganosiloxan-und/oder Polyurethan-Polyorganosiloxan-Verbindungen im Kontext von Wäscheauffrischersystemen auf feste Träger aufzubringen und diese dann im Wäschetrockner in Kontakt mit aufzufrischenden und/oder weich zu machenden Textilien zu bringen. Geträgerte Wäscheauffrischersysteme und deren Funktionalkomponenten sind beispielsweise aus US 4,824,582, US 4,808,086, US 4,756,850, US 4,749,596, US 3,686,025 bekannt.

Typische Komponenten für derartige geträgerte Wäscheauffrischersysteme sind:
- Fettamine bzw. deren Komplexe mit anionischen Tensiden als Konditioniermittel
- quaternäre Ammoniumverbindungen, bevorzugt Alkansäureestereinheiten enthaltende quaternäre Ammoniumverbindungen als Weichmacher
- nichtionogene Weichmacher, beispielsweise auf Basis von Sorbitanestern, Fettalkohlalkoxylaten
- "soil release agents", beispielsweise auf Basis von Celluloseethern, Guar Gum, Terephthalsäureblockcopolymeren.

Das Trägermaterial ist ein schwammartiges oder poröses blattartiges Material, welches eine hinreichende Kapazität zur Aufnahme der Wäscheauffrischerformulierung aufweist. Es kommen "woven"- und "nonwoven"- Materialien zum Einsatz. Es handelt sich um Materialien auf Basis natürlicher oder synthetischer Polymerer, wie Wolle, Baumwolle, Sisal, Leinen, Celluloseestern, Polyvinylverbindungen, Polyolefinen, Polyamiden, Polyurethanen, Polyestern.

Die Erfindung betrifft weiterhin reaktive Zusammensetzung, enthaltend mindestens eine Verbindung der Formel (6) 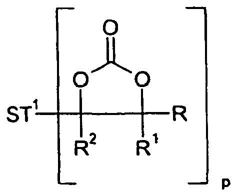 worin R, R¹, R² und ST¹ wie oben definiert sind, und p≥ 2 ist,
sowie mindestens eine Verbindung der Formel (7)

ST²(-Y-H)_{q},

worin ST² und Y wie oben definiert sind, und worin q ≥ 2 ist,
mit der Maßgabe, dass wenigstens einer der Reste ST¹ und ST² einen Polyorganosiloxanrest umfasst.

Bevorzugt ist Y dabei NR⁶, worin R⁶ wie oben definiert, besonders bevorzugt Wasserstoff.
mindestens eine Verbindung der Formel (8)

HY-ST³-NR⁵₂,

worin ST³, Y und R⁵ wie oben definiert sind, und
mindestens eine Verbindung der Formel (10)

Q-ST^{4V}-Q (10),

worin Q wie oben definiert ist,
mit der Maßgabe, dass wenigstens einer der Reste ST¹, ST³ und/oder ST⁴ einen Polyorganosiloxanrest umfasst.

Dabei ist R, R¹, R² bevorzugt jeweils Wasserstoff, Y ist bevorzugt NR⁶ ist, wobei R⁶ wie oben definiert, besonders bevorzugt Wasserstoff.

Die Erfindung betrifft weiterhin gehärtete Zusammensetzungen, erhältlich durch Härten der genannten reaktiven Zusammensetzungen. Die Härtung der reaktiven Zusammensetzungen erfolgt insbesondere zur Herstellung von Beschichtungen auf Substraten, wie Fasern, harten Oberflächen, wie auf Kunststoffen, Metall etc. Die Härtung kann bei Temperaturen von Raumtemperatur (20 °C) bis etwa 250 °C erfolgen. Wie oben dargelegt, ist es auch möglich weitere reaktive Vernetzer während oder auch nach der Umsetzung der cyclischen Dicarbonate einzusetzen, wie z.B. Polyisocyanate.

Es ist auch möglich auf diese Weise thermoplastische, elastomere oder duroplastische Formkörper oder Dichtungsmassen herzustellen.

Die vorliegende Erfindung wird durch die folgenden Beispiele weiter veranschaulicht.

### BEISPIELE

### Beispiel 1

### Synthese eines carbonatterminierten Siloxans

Unter N₂ werden 400 g eines epoxyterminierten Polyethers der Struktur 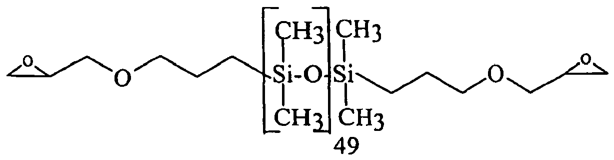 mit 4 g Tetrabutylammoniumbromid vermischt und auf 130 °C erhitzt.

Für insgesamt 19 Stunden wird CO₂ mit einem Überdruck von 200 mbar eingeleitet. Anschließend werden Flüchtige innerhalb 1 Stunde bei 130 °C im Ölpumpenvakuum ausgeheizt. Ausbeute 326 g eines Carbonats der Struktur

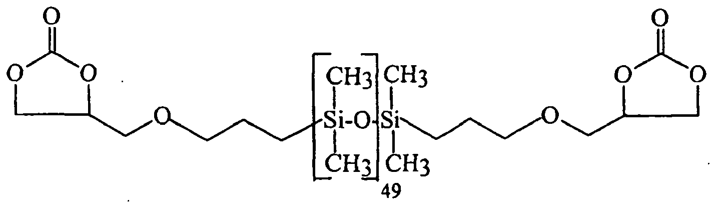

### Beispiel 2

### Synthese eines Blockcopolymeren, ausgehend von einem siloxanbasierten Carbonat

Unter N₂ werden 50 g (12,47 mmol) des carbonat-terminierten Siloxans gemäß

### Beispiel 1

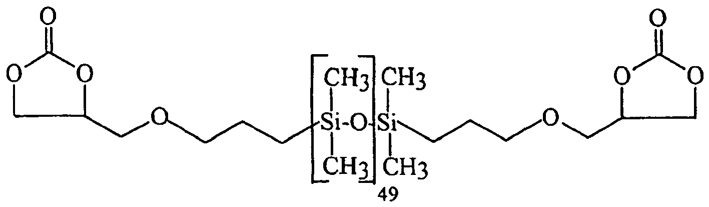

und 2,55 g (29,9 mmol) H₂NCH₂CH₂CH₂N(CH₃)₂ in 66 g 2-Propanol für 10 Stunden auf Rückflusstemperatur erhitzt. Der über ¹H-NMR ermittelte Umsatz der Carbonatgruppen liegt bei 96 %. Der Ansatz wird für weitere 3 Stunden auf Rückflusstemperatur erhitzt.

Anschließend werden 13,1 g (12,47 mmol) eines Chloressigsäureesters der Struktur 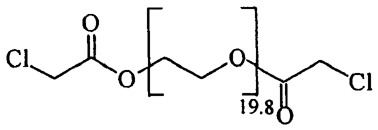 zugetropft und die Mischung für weitere 10 Stunden auf Rückflusstemperatur erhitzt. Es wird eine transparente, bernsteinfarbene Lösung gewonnen. Das Polymer enthält folgende Strukturelemente

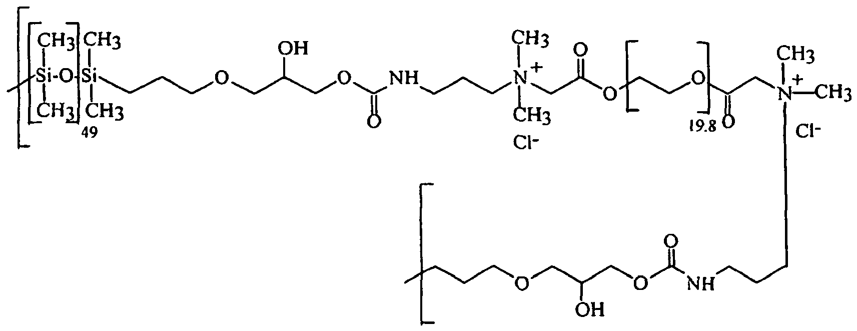

### Beispiel 3

### Synthese eines carbonat-terminierten Kohlenwasserstoffs

Unter N₂ werden 200 g eines kommerziell verfügbaren epoxyterminierten Polyethers der Struktur 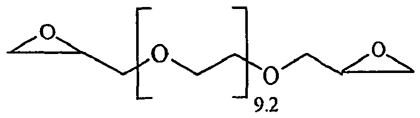 mit 2 g Tetrabutylammoniumbromid vermischt und auf 130 °C erhitzt.

Für insgesamt 20 Stunden wird CO₂ mit einem Überdruck von 200 mbar eingeleitet. Anschließend werden Flüchtige innerhalb 1 Stunde bei 130 °C im Ölpumpenvakuum ausgeheizt. Mittels ¹H-NMR Spektroskopie wurde festgestellt, daß das gebildete Polyethercarbonat 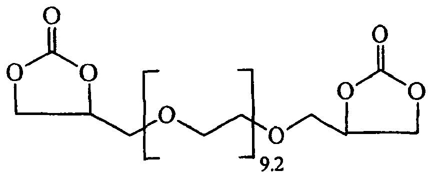 keine Epoxidgruppen mehr enthält. Ausbeute 203 g.

### Beispiel 4

### Synthese eines Blockcopolymeren, ausgehend von einem kohlenwasserstoffbasierten Carbonat

Unter N₂ werden 10 g (16 mmol) des carbonatterminierten Polyethers gemäß Beispiel 3 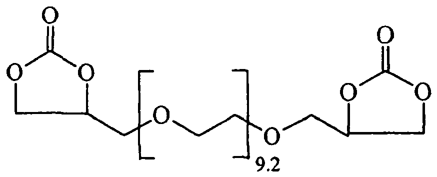 und 3,3 g (32 mmol) H₂NCH₂CH₂CH₂N(CH₃)₂ in 59 g Propylenglykolmonomethylether gelöst und für 9 Stunden auf 115-120 °C erhitzt. Anschließend werden 45,5 g (16 mmol) eines Chloressigsäureesters der Struktur 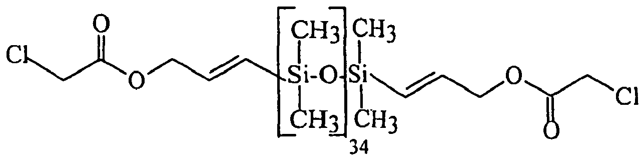 hergestellt durch Pt-katalysierte Hydrosilylierung von CH≡CCH₂OC(O)CH₂Cl mit einem entsprechenden α,ω-SiH terminierten Siloxan analog zu WO 02/10256 Beispiel 1, zugetropft und die Mischung für weitere 10 Stunden auf 120-125 °C erhitzt. Es wird eine transparente, rötliche Lösung gewonnen. Das Polymer enthält folgende Strukturelemente

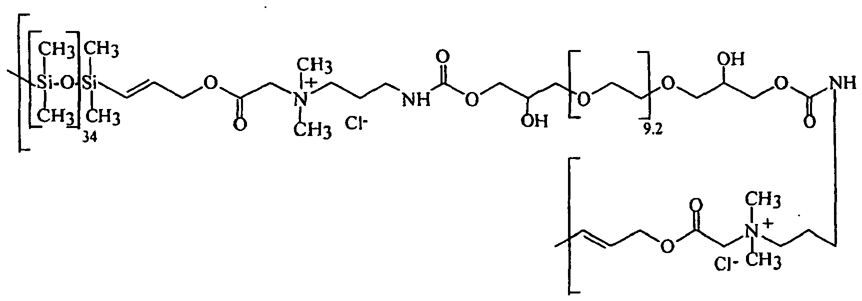

### Beispiel 5

Unter N₂ werden 150 g (390 mmol NH₂; 2,6 mmol NH₂/g) eines kommerziell verfügbaren ethoxyfunktionalisierten Aminosiloxans der Struktur 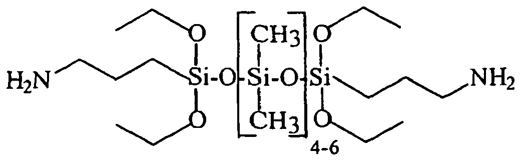 und eine Lösung von 0,5 g KOH in 1,5 g Methanol in 180 g Dipropylenglykolmonobutylether aufgenommen. Die Mischung wird auf 120-130 °C erhitzt. Nach Anlegen von leichtem Vakuum (380 mm Hg) destillieren 24,8 g Leichtsieder ab. Es werden nachfolgend 0,6 g Essigsäure zugesetzt. Anschließend wird der Ansatz für 0,5 Stunden auf 135 °C erhitzt, wobei leichtes Vakuum (380 mm Hg) anliegt, um Reste von Flüchtigen zu entfernen.

Es werden 289 g eines Produktes gewonnen mit einem Amingehalt von 1,348 mmol NH₂/g und der Struktur

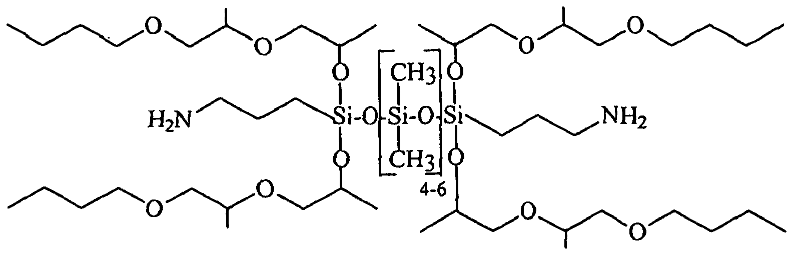

### Beispiel 6

### Synthese einer erfindungsgemäßen carbonatterminierten Polyurethan-Polyorganosiloxan-Verbindung

Unter N₂ werden 9,25 g (12,47 mmol NH₂ Gruppen; 1,348 mmol NH₂/g) des alkoxyfunktionalisierten Aminosiloxans gemäß Beispiel 5

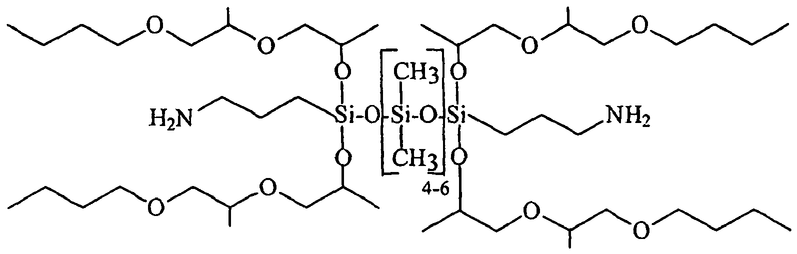

49,25 g (12,47 mmol entsprechend 24,94 mmol Cyclocarbonatgruppen) eines analog zu Beispiel 1 hergestellten carbonatterminierten Siloxans der Struktur 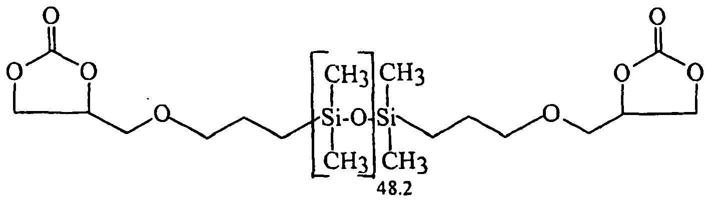 in 61 g Propylenglykolmonomethylether gelöst und für 13 Stunden auf 120-122 °C erhitzt. Es wird eine Verbindung der Formel 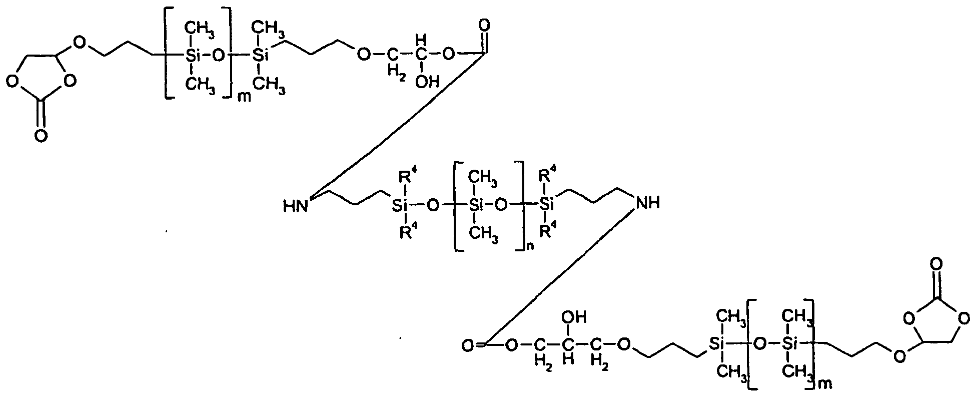 erhalten, worin die Indizes m und n denen der Ausgangsmaterialien entsprechen und R⁴ Alkoxy, wie im Ausgangsamin entspricht.

### Beispiel 7

### Synthese des Blockcopolymeren mit zur Vernetzung fähigen Alkoxysilylgruppen

Zur Lösung der Verbindung von Beispiel 6 werden 1,27 g (12,47mmol) H₂NCH₂CH₂CH₂N(CH₃)₂ zugesetzt. Diese Mischung wird für weitere 9 Stunden bei 120-122 °C gehalten. Abschließend werden 6,55 g (6,235 mmol) eines Chloressigesters der Struktur 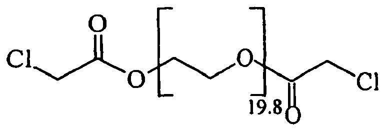 zugesetzt und der Ansatz für 9 Stunden bei 120-125 °C gerührt.

Es wird eine leicht trübe, gelbliche zähe Lösung erhalten, wobei das Polymer folgende Strukturelemente aufweist 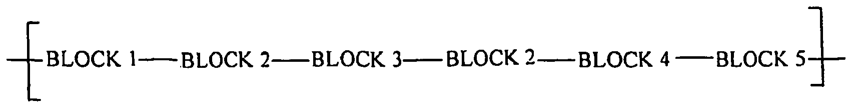 mit
BLOCK 1 : Y-ST³-NR₂: 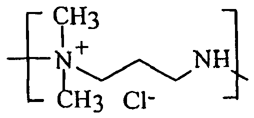 BLOCK 2: Car-ST¹-Car 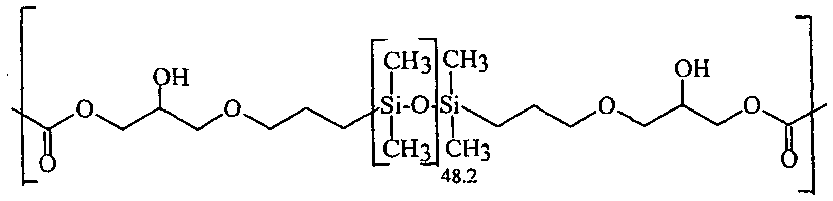 BLOCK 3: Y-ST²-Y 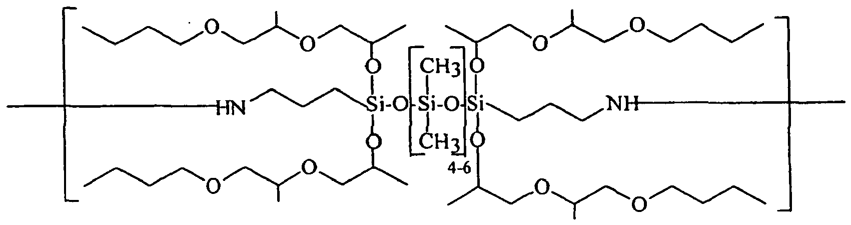 BLOCK 4 :Y-ST³-NR₂: 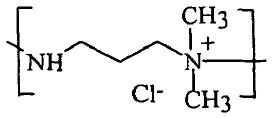 BLOCK 5: Q-ST⁴-Q:

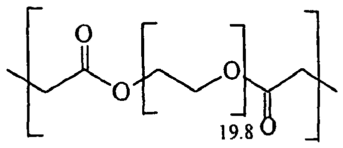

Die Polymeren gemäß Beispielen 2, 4, 6 und 7 können beispielsweise in einer Menge von 0,5-3 % in pulverförmige und flüssige Waschmittel insbesondere auf Basis anionischer und/oder nichtionogener Tenside eingearbeitet werden, und üben dort insbesondere ihre weichmachende Wirkung auf die zu reinigenden Fasermaterialien aus.

### BEISPIEL 8:

### Synthese eines carbonatterminierten Siloxans

Unter N₂ werden 400 g eines epoxy-terminierten Polyethers der Struktur 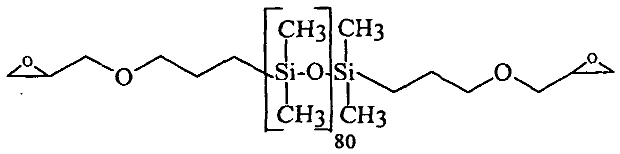 mit 4 g Tetrabutylammoniumbromid vermischt und auf 130 °C erhitzt.

Für insgesamt 34 Stunden wird CO₂ mit einem Überdruck von 200 mbar eingeleitet. Anschließend werden Flüchtige innerhalb 1 Stunde bei 130 °C im Ölpumpenvakuum ausgeheizt. Ausbeute 376 g eines Carbonats der Struktur

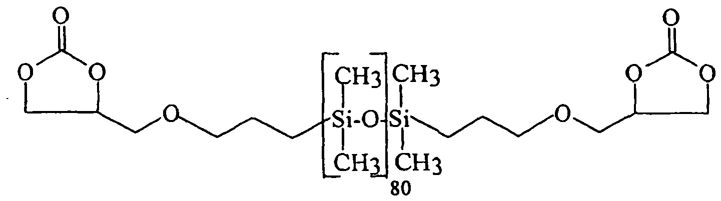

### Beispiel 9

### Synthese eines carbonatterminierten Kohlenwasserstoffs

Unter N₂ werden 200 g eines kommerziell verfügbaren epoxyterminierten Polyethers der Struktur 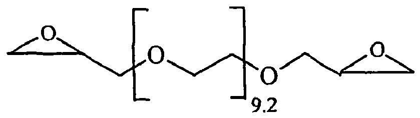 mit 2 g Tetrabutylammoniumbromid vermischt und auf 130 °C erhitzt.

Für insgesamt 20 Stunden wird CO₂ mit einem Überdruck von 200 mbar eingeleitet. Anschließend werden Flüchtige innerhalb 1 Stunde bei 130 °C im Ölpumpenvakuum ausgeheizt. Mittels ¹H-NMR Spektroskopie wurde festgestellt, daß das gebildete Polyethercarbonat 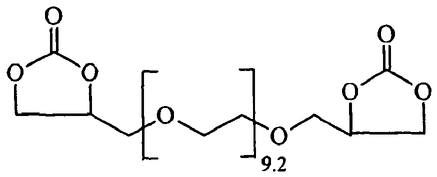 keine Epoxidgruppen mehr enthält. Ausbeute 203 g.

### Beispiel 10

### Synthese eines Blockcopolymeren, ausgehend von einem siloxan-basierten Carbonat und einem kohlenwasserstoff-basierten Carbonat

Unter N₂ werden 55,8 g (8 mmol) des carbonat-terminierten Siloxans gemäß Beispiel 8 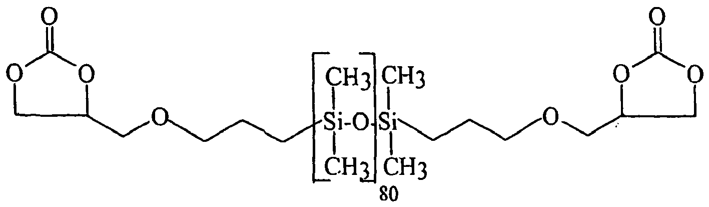 5 g (8 mmol) des carbonat-terminierten Kohlenwasserstoffs gemäß Beispiel 9 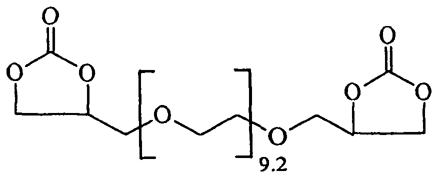 und 2,3 g (16 mmol) H₂NCH₂CH₂CH₂N(CH₃)CH₂CH₂CH₂NH₂ in 63 g Propylenglykolmonomethylether gelöst und für 12 Stunden auf 118 °C erhitzt. Anschließend werden 1,96g (16mmol) ClCH₂C(O)OCH₂CH₃ und 35 g Propylenglykolmonomethylether zugetropft und die Mischung für weitere 8 Stunden auf 118 °C gehalten. Es wird eine leicht trübe, viskose Lösung gewonnen.

Das gebildete Polymer enthält folgende Strukturelemente im molaren Verhältnis 1 : 1

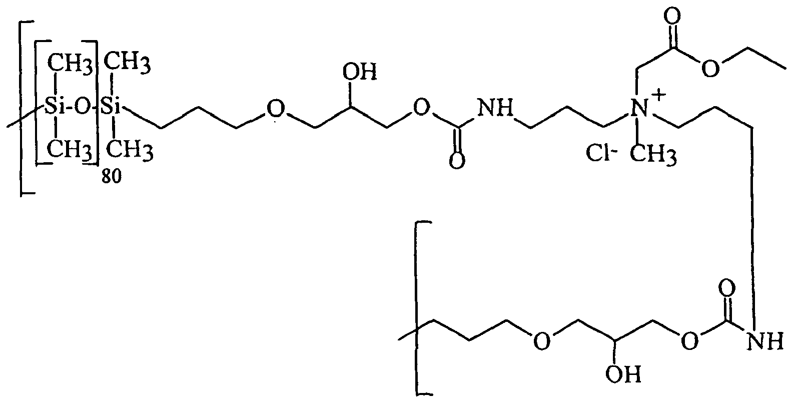

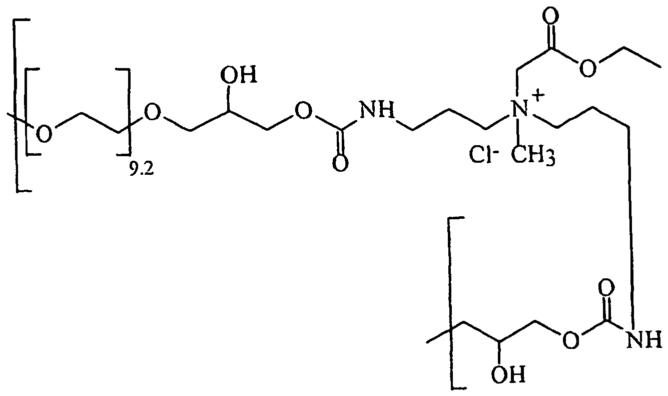

Das Polymer gemäß Beispiel 10 kann bevorzugt in einer Menge von 0,5-3 % in pulverförmige und flüssige Waschmittel insbesondere auf Basis anionischer und/oder nichtionogener Tenside eingearbeitet werden, und übt dort insbesondere ihre weichmachende Wirkung auf die zu reinigenden Fasermaterialien aus.

## Patentansprüche

1. Polycarbonat-Polyorganosiloxan- und/oder Polyurethan-Polyorganosiloxan-Verbindung, enthaltend mindestens ein Strukturelement der Formel (1): 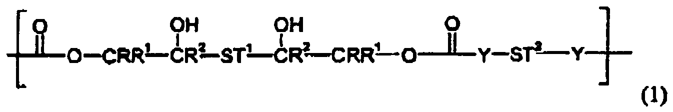 worin
R jeweils ausgewählt wird aus Wasserstoff, Alkyl oder einer Bindung zum Rest ST¹, wobei sich, wenn R eine Bindung zum Rest ST¹ darstellt, cyclische Strukturen ausbilden,
R¹ jeweils ausgewählt wird aus Wasserstoff, Alkyl oder einer Bindung zum Rest ST¹, wobei sich, wenn R¹ eine Bindung zum Rest ST¹ darstellt, cyclische Strukturen ausbilden,
R² jeweils ausgewählt wird aus Wasserstoff Alkyl oder einer Bindung zum Rest ST¹, wobei sich, wenn R² eine Bindung zum Rest ST¹ darstellt, cyclische Strukturen ausbilden,
ST¹ ein zwei- oder mehrwertiger, geradkettiger, cyclischer oder verzweigter, gesättigter, ungesättigter oder aromatischer, substituierter oder unsubstituierter Kohlenwasserstoffrest mit bis zu 1000 Kohlenstoffatomen ist, der eine oder mehrere Gruppen, ausgewählt aus
-O-,
-C(O)-, und
einer Polyorganosiloxaneinheit mit 2 bis 1000 Siliciumatomen
enthalten kann, worin
wobei ST¹ keine Gruppen der Formel -O-(O)-O- und keine Gruppen der Formel -O-C(O)-NH- enthält,
wobei, wenn eine Mehrzahl von Resten ST¹ vorliegt, diese gleich oder verschieden sein können,
Y unabhängig voneinander ausgewählt wird aus: -O-, -S-- und -NR⁶-,worin
R⁶ Wasserstoff oder ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)-, -NH- und -NR³- enthalten kann, worin R³ wie unten definiert ist, oder
R⁶ eine Bindung zum Rest ST² darstellt unter Bildung cyclischer Strukturen, ST² ein zwei- oder mehrwertiger, geradkettiger, cyclischer oder verzweigter, gesättigter, ungesittigter oder aromatischer, substituierter oder unsubstituierter Kohlenwasserstoffrest mit bis zu 1000 Koblenstoftätomen ist, der eine oder mehrere Gruppen, ausgewählt aus
-O-,
-C(O)-,
-NH- ;
-NR³-, 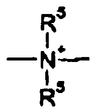 und
einer Polyorganosiloxaneinheit mit 2 bis 1000 Siliciumatomen
enthalten kann, worin
R³ ein geradkettiger, cyclischer oder verzweigter, gesättigter, ungesättigter oder aromatischer Kohlenwasserstoffrest mit bis zu 40 Kohlenstoffatomen ist, der eine oder mehrere Gruppen, ausgewählt aus -O-, -C(O)- und NH- enthalten kann, und gegebenenfalls durch eine Silylgruppe substituiert sein kann, und,
R⁵ ein geradkettiger, cyclischer oder verzweigter, gesättigter, ungesättigter oder aromatischer Kohlenwasserstoffrest mit bis zu 100 Kohlenstoffatomen ist, der eine oder mehrere Gruppen, ausgewählt aus -O-, -C(O)- und -NH- enthalten kann, und gegebenenfalls durch eine Silylgruppe substituiert sein kann, oder zwei Reste R⁵ mit dem Stickstoffatom, an das sie gebunden sind, einen 5- bis 7-gliedrigen Ring bilden, der gegebenenfalls ein oder zwei weitere Heteroatome enthalten kann, oder R⁵ zusammen mit R⁶ einen zweiwertigen Alkylenrest bildet, der zur Ausbildung einer cyclischen Struktur unter Einschluß von Y und ST² führt,
wobei, wenn eine Mehrzahl von Resten ST² vorliegt, diese gleich oder verschieden sein können,
mit der Maßgabe, dass wenigstens einer der Reste ST¹ und/oder ST² einen Polyorganosiloxanrest umfasst,
oder Säureaddidonsverbindungen und/oder Salze davon.

2. Polycarbonat-Polyorganosiloxan- und/oder Polyurethan-Polyorganosiloxan-Verbindung nach Anspruch 1, enthaltend mindestens einen Polyorganosiloxanrest der Formel (2): 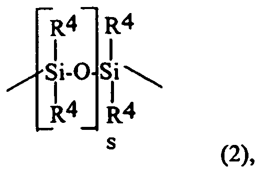 worin
R⁴ ein geradkettiger, cyclischer oder verzweigter, gesättigter, ungesättigter oder aromatischer Kohlenwasserstoffrest mit bis zu 20 Kohlenstoffatomen ist, und/oder R⁴ ist Alkoxyrest, dessen Alkylteil ein geradkettiger, cyclischer oder verzweigter, gesättigter Alkylrest mit bis zu 20 Kohlenstoffatomen ist, der ein oder mehrere Sauerstoffatome enthalten kann, und
s = 1 bis 999 ist.

3. Polycarbonat-Polyorganosiloxan- und/oder Polyurethan-Polyorganosiloxan-Verbindung nach einem der Ansprüche 1 bis 2, enthaltend mindestens zwei Strukturelemente der Formel (1).

4. Polycarbonat-Polyorganosiloxan- und/oder Polyurethan-Polyorganosiloxan-Verbindung nach einem der Ansprüche 1 bis 3, **dadurch gekennzeichnet, dass** sie Aminogruppen, protonierte Aminogruppen, quaternäre Ammoniumgruppen und/oder Polyethergruppen enthält.

5. Polycarbonat-Polyorganosiloxan- und/oder Polyurethan-Polyorganosiloxan-Verbindung nach einem der Ansprüche 1 bis 4, worin ST² einen Rest der Formel (5)
ST³-N⁺(R⁵)₂-ST⁴-N⁺(R⁵)₂-ST³- + 2 A⁻ (5)
darstellt, worin
R⁵ wie oben definiert ist,
ST³ ein zwei- oder mehrwertiger, geradkettiger oder cyclischer oder verzweigter, gesättigter oder ungesättigter oder aromatischer, substituierter oder unsubstituierter Kohlenwasserstoffrest mit 2 bis 100 Kohlenstoffatomen ist, der -O-, -C(O)-, NH- und/oder -NR³- enthalten kann, worin R³ wie oben definiert ist, und
ST⁴ ein zwei- oder mehrwertiger, geradkettiger oder cyclischer oder verzweigter, gesättigter oder ungesättigter oder aromatischer, substituierter oder unsubstituierter Kohlenwasserstoffrest mit 2 bis 100 Kohlenstoffatomen ist, der -O-, -C(O)-, -NH-, NR³- und/oder eine Polyorganosiloxaneinheit mit 2 bis 500 Siliciumatomen enthalten kann, worin R³ wie oben definiert ist, und
A⁷ ein organisches oder anorganisches Anion ist.

6. Polycarbonat-Polyorganosiloxan- und/oder Polyurethan-Polyorganosiloxan-Verbindung nach einem der Ansprüche 1 bis 5 der folgenden Formel (3): 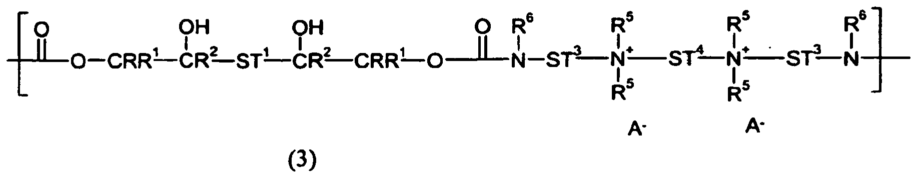 worin
R, R¹, R², ST¹, ST³, ST⁴, R⁶ und R⁵ wie oben definiert sind, und
A- ein organisches oder anorganisches Anion ist,
mit der Maßgabe, dass wenigstens einer der Reste ST¹, ST³ und ST⁴ einen Polyorganosiloxanrest enthält.

7. Polycarbonat-Polyorganosiloxan- und/oder Polyurethan-Polyorganosiloxan-Verbindung nach einem der Ansprüche 1 bis 6, worin ST¹ und/oder ST² aus der Gruppe ausgewählt wird, die besteht aus: Polyorganosiloxan-haltigen Resten, Polyether-haltigen Resten, Polyorganosiloxan- und Polyether-haltigen Resten, monocyclischen oder polycyclischen Kohlenwasserstoffresten, acyclischen, gegebenenfalls Sauerstoff enthaltenden Kohlenwasserstoffresten und aromatische Gruppen aufweisenden, gegebenenfalls Sauerstoff enthaltenden Kohlenwasserstoffresten.

8. Verfahren zur Herstellung der Polycarbonat-Polyorganosiloxan- und/oder Polyurethan-Polyorganosiloxan-Verbindung nach einem der Ansprüche 1 bis 7 welches die Umsetzung einer Verbindung der Formel (6) 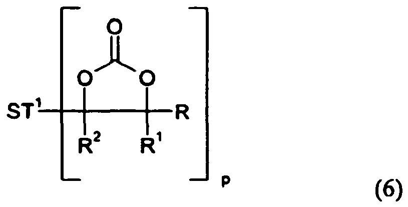 worin R, R¹, R² und ST¹ wie oben definiert sind, und p≥ 2 ist,
und mindestens einer Verbindung der Formel (7)
ST²-(Y-H)_{q},
worin ST² und Y wie oben definiert sind, und worin q ≥ 2 ist, umfasst.

9. Verfahren zur Herstellung der Polycarbonat-Polyorganosiloxan- und/oder Polyurethan-Polyorganosiloxan-Verbindung nach einem der Ansprüche 1 bis 7, welches die Umsetzung einer Verbindung der Formel (6) 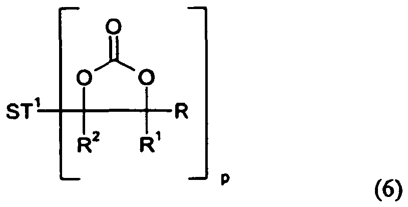 worin R, R¹, R² und ST¹ wie oben definiert sind, und p≥ 2 ist,
mit einer Verbindung der Formel (8)
HY-ST³-NR⁵₂,
worin ST³, Y und R⁵ wie oben definiert sind,
und einer Verbindung der Formel (9)
HY-ST³-NR⁵₂,
worin
Q ein zur Alkylierung einer Aminogruppe befähigter Rest ist, ST^{4V} gemeinsam mit dem aus Q nach der Quaternierungsreaktion hervorgehenden Molekülteil den Rest ST⁴ bildet, und t ≥ 2 ist.

10. Verwendung der Polycarbonat-Polyorganosiloxan- und/oder Polyurethan-Polyorganosiloxan-Verbindung nach einem der Ansprüche 1 bis 7 zur Herstellung von Beschichtungen, Mitteln zur Oberflächenmodifizierung, Elastomeren, Duromeren, Klebstoffen, Primern für Metall- und Kunststoff oberflächen, Polymeradditiven, Waschmitteladditiven, rheologischen Mitteln, kosmetischen Mitteln, Fasermodifizierungsmitteln.

11. Verwendung der Polycarbonat-Polyorganosiloxan- und/oder Polyurethan-Polyorganosiloxan-Verbindung nach einem der Ansprüche 1 bis 7
- als Weichmacher für Fasern insbesondere in Waschmitteln, Textilpflegemitteln, Textilausrüstungsmitteln,
- als Weichmacher-Komponente in Waschmitteln, Textilpflegemitteln, Textilausrüstungsmitteln,
- als Polymeradditiv, wie Modifizierungsmittel für thermoplastische Kunststoffe, wie Polyolefine, Polyamide, Polyurethane, Poly(meth)-acrylate, Polycarbonate, Polyester,
- als Mittel zur Oberflächenmodifizierung, wie zur Modifizierung von harten Oberflächen, wie beispielsweise Glas, Keramik, Kacheln, Beton und Stahlteilen, wie Autokarosserien und Schiffskörper,
- als Klebstoff,
- als Primer für Metall- und Kunststoffoberflächen, wie Primer zur Verbindung von Siliconelastomeren mit anderen Substraten, wie Stahl, Aluminium, Glas, Kunststoffen, wie Epoxidharzen, Polyamiden, Polyphenylensulfiden, Polyestern, wie Polyterephthalaten,
- als rheologisches Mittel,
- als Beschichtung, Dichtungsmasse oder Elastomer,
- in kosmetischen Mitteln, wie als Emulgator, Konditionierungsmittel, Festigungsmittel, Verdicker,
- in kosmetischen Formulierungen für Haare als Konditionierungsmittel ("conditioner"),
- als Modifizierungsmittel,
- als Tieftemperaturschlagzäh-Modifikatoren,
- als Bestandteil in Kleb- und Dichtstoffen,
- als Ausgangsmaterial für die Herstellung von Elastomeren, wie thermoplastischen Elastomeren, wie beispielsweise für die Herstellung von Kabelumhüllungen, Schläuchen, Dichtungen, Tastaturmatten, Membranen, wie selektiv gasdurchlässige Membranen,
- als Beschichtungen, wie Antifouling-, Antihaftbeschichtungen, gewebeverträgliche Überzüge, flammgehemmte Überzüge und als Beschichtungen für biokompatible Materialien,
- als Überzugsmittel für Kosmetika, Körperpflegemittel, Lackadditive, Hilfsstoffe in Waschmitteln, Entschäumerformulierungen und Textilbearbeitungsformulierungen, zum Modifizieren von Harzen oder zur Bitumenmodifizierung,
- als Verpackungsmaterial für elektronische Bauteile,
- als Isolations- oder Abschirmungsmaterialien,
- als Dichtungsmaterial in Hohlräumen mit Kondensatwasserbildung, wie in Flugzeugen, Schiffen, Automobilen,
- als Additive für Putz-, Reinigungs- oder Pflegemittel,
- als Additiv für Körperpflegemittel,
- als Beschichtungsmaterial für Holz, Papier und Pappe,
- als Formentrennmittel,
- als biokompatibles Material in medizinischen Anwendungen wie Kontaktlinsen,
- als Beschichtungsmaterial für Textilfasern oder textile Gewebe,
- als Beschichtungsmaterial für Naturstoffe, wie z.B. Leder und Pelze,
- als Material für Membranen und
- als Material für photoaktive Systeme z. B. für lithographische Verfahren, optische Datensicherung oder optische Datenübertragung,
- als Viskositätsregler, antistatisches Mittel,
- als Mischungskomponente für Silikonkautschuke, die peroxidisch oder durch Hydrosilylierung (Platin Katalyse) zu Elastomeren vernetzt werden können, und dort zur Modifizierung von Oberflächeneigenschaften, wie zur Modifizierung der Diffusion von Gasen und Flüssigkeiten, und/oder zur Modifizierung des Quellverhaltens der Silikonelastomere dienen,
- als Weichmacher für Textilfasern,
- als Weichmacher zur Behandlung der Textilfasern vor, während und nach der Wäsche mit auf anionischen, nichtionogenen und kationischen Tensiden beruhenden Formulierungen,
- als Mittel zur Modifizierung von natürlichen und synthetischen Fasern, wie beispielsweise Haaren, Baumwollfasern und Synthesefasern, wie Polyesterfasern und Polyamidfasern sowie Mischgeweben,
- in Textilausrüstungsmitteln, sowie
- in detergenzienhaltigen Formulierungen, wie Waschmitteln, Reinigungsmitteln.

12. Verwendung der Polycarbonat-Polyorganosiloxan- und/oder Polyurethan-Polyorganosiloxan-Verbindung nach einem der Ansprüche 1 bis 7
- in festen oder flüssigen Waschmittelformulierungen in Anteilen von etwa 0,1 bis 10 Gew.% bezogen auf die Gesamtmenge der Formulierung,
- in kosmetischen Formulierungen und Faserbehandlungsformulierungen, wie Textilpflegemitteln, in Anteilen von etwa 0,1 bis 50 Gew.-% bezogen auf die Gesamtmenge der Formulierung,
- in Formulierungen zur Behandlung und Ausrüstung von harten Oberflächen, wie Glas, Keramik, Kacheln, Kunststoffoberflächen, Metalloberflächen, Lackoberflächen, speziell Schiffskörpern und Automobilkarosserien, ganz speziell auch in Trocknerformulierungen für die maschinelle Autowäsche,
- als Kleber bzw. Primer, bevorzugt zur Verbindung von Siliconenelastomeren mit anderen Substraten, wie Stahl, Aluminium, Glas, Epoxidharz, Polyamid,
- als Modifikatoren, wie Tieftemperaturschlagzäh-Modifikatoren und Polaritätsmodifikatoren für kohlenwasserstoffbasierte Polymere und siliconbasierte Elastomersysteme, die auf peroxidischer und Platinkatatalysierter Vernetzung beruhen,
- in Formulierungen zur Behandlung von natürlichen und synthetischen Fasern, beispielsweise Baumwolle, Wolle, polyester- und polyamidbasierten Synthesefasern, speziell in Form von Textilien,
- in Mitteln zur Faserbehandlung, insbesondere in anionische, nichtionische und/oder kationische Tenside enthaltenden Waschmittelformulierungen, wie Mitteln, die Bestandteil des Waschmittels sind, Mitteln, die separat in den laufenden Waschprozeß gegeben werden, oder Mittel, die nach dem Waschprozeß zugegeben werden,
- als Bestandteil separater Weichmachersysteme, speziell auf Basis kationischer Tenside, insbesondere für die Zugabe nach der Wäsche von Fasern und Textilien,
- als Bügelhilfe und Mittel zur Verhinderung bzw. Rückgängigmachung von Textilverknitterungen,
- in Formulierungen zur Faserausrüstung, speziell zur Erstausrüstung und Behandlung von beispielsweise Baumwolle, Wolle, polyester- und polyamidbasierten Synthesefasern, speziell in Form von Textilien, Papier und Holz,
- in kosmetischen Systemen zur Behandlung von Haaren und Haut, insbesondere als Reinsubstanz, Lösung, Mischung, Emulsion oder Mikroemulsion in Form von Flüssigkeiten, Cremes oder Pasten insbesondere in unterschiedlicher Viskositäten,
- in kosmetischen Systemen zur Behandlung von Haaren und Haut, speziell in "Rinse-off" Produkten, wie z.B. "2-in-1" Shampoos, "Body Wash" und Haarspülungen zur Behandlung von Haar während und nach der Reinigung, oder nach dem Färben oder der Behandlung von Haar vor der Bleichung, der Lockung oder Entkräuselung, sowie in sogenannten "Leave-in" Produkten wie Haarkuren, Pflegecremes, Frisiercremes, Haargele, Haarstylingprodukte, Haarfestiger, Haarsprays, Pumpsprays, Fönwellmittel und Fönfestiger, in Haarfärbemitteln, speziell permanenten, semipermanenten und temporären Haarfärbemitteln,
- als Bestandteil von Weichspülerformulierungen,
- als Bestanteil von auf festen Trägern befindlichen Wäscheauffrischersystemen.

13. Waschmittelformulierungen, kosmetische Formulierungen oder Formulierungen zur Faserbehandlung, enthaltend mindestens eine Polycarbonat-Polyorganosiloxan- und/oder Polyurethan-Polyorganosiloxan-Verbindung nach einem der Ansprüche 1 bis 7.

14. Reaktive Zusammensetzung, enthaltend mindestens eine Verbindung der Formel (6) 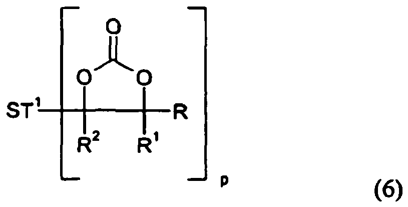 worin R, R¹, R² und ST¹ wie oben definiert sind, und p≥ 2 ist,
sowie mindestens eine Verbindung der Formel (7)
ST²-(Y-H)_{q},
worin ST² und Y wie oben definiert sind, und worin q ≥ 2 ist,
mit der Maßgabe, dass wenigstens einer der Reste ST¹ und ST² einen Polyorganosiloxanrest umfasst.

15. Reaktive Zusammensetzung, enthaltend mindestens eine Verbindung der Formel (6) 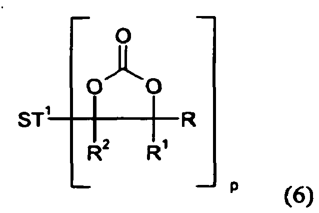 worin R, R¹, R² und ST¹ wie oben definiert sind, und p≥ 2 ist, und
mindestens eine Verbindung der Formel (8)
HY-ST³-NR⁵₂,
worin ST³, Y und R⁵ wie oben definiert sind, und
Q-ST^{4V}-Q
mindestens eine Verbindung der Formel (10)
Q-ST^{4V}-Q,
worin Q wie oben definiert ist,
mit der Maßgabe, dass wenigstens einer der Reste ST¹, ST³ und/oder ST⁴ einen Polyorganosiloxanrest umfasst.

## Claims

1. A polycarbonate-polyorganosiloxane and/or a polyurethane-polyorganosiloxane compound containing at least one structural element of formula (1): 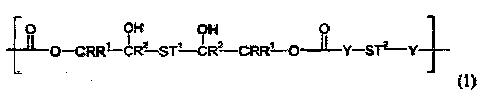 wherein
R is respectively selected from hydrogen, alkyl or a bond to the residue ST¹, forming cyclic structures if R is a bond to the residue ST¹,
R¹ is respectively selected from hydrogen, alkyl or a bond to the residue ST¹, forming cyclic structures if R¹ is a bond to the residue ST¹,
R² Is respectively selected from hydrogen, alkyl or a bond to the residue ST¹, forming cyclic structures if R² is a bond to the residue ST¹,
ST¹ Is a dl- or polyvalent, straight-chained, cyclic or branched, saturated, unsaturated or aromatic, substituted or unsubstituted hydrocarbon residue with up to 1000 carbon atoms which may contain one or more groups selected from:
-O-,
-C(O)-, and
a polyorganosiloxane unit with 2 to 1000 silicon atoms
wherein
ST¹ does not contain groups of formula -O-C(O)-O- and groups of formula -O-C(O)-NH,
whereby, if a majority of residues ST¹ Is present, they can be equal or different,
Y Is selected independently from one another from -O-, -S- and -NR⁶-, wherein
R⁶ is hydrogen or a straight-chained, cyclic or branched, saturated, unsaturated or aromatic hydrocarbon residue with up to 40 carbon atoms, which may contain one or more groups selected from -O-, -C(O)-, -NH- and -NR³-, wherein R³ is as defined below, or
R⁶ represents a bond to the residue ST² while forming cyclic structures,
ST² is a dl- or polyvalent, straight-chained, cyclic or branched, saturated, unsaturated or aromatic, substituted or unsubstituted hydrocarbon residue with up to 1000 carbon atoms, which may contain one or more groups selected from
-O-,
-C(O)-
-NH-,
-NR¹-, 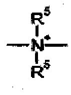 and
a polyorganosiloxane unit with 2 to 1000 silicon atoms, wherein
R³ is a straight-chained, cyclic or branched, saturated, unsaturated or aromatic hydrocarbon residue with up to 40 carbon atoms, which may contain one or more groups selected from -O-, -C(O)- and -NH-, and may optionally be substituted by a silyl group, and
R⁵ is a straight-chained, cyclic or branched, saturated, unsaturated or aromatic hydrocarbon residue with up to 100 carbon atoms, which may contain one or more groups selected from -O-, -C(O)- and -NH-, and may optionally be substituted by a silyl group, or two of the residues R⁶ form a ring of 5 to 7 members together with the nitrogen atom to which they are bonded, which may optionally contain one or two further hetero atoms, or R⁶ forms a dlvalent alkylene residue together with R⁶ resulting In the formation of a cyclic structure Including Y and ST²,
whereby, If a majority of residues ST² is present, they can be equal or different,
provided that at least one of the residues ST¹ and /or ST² comprises a polyorganosiloxane residue,
or compounds of acid addition and/or salts thereof.

2. The polycarbonate-polyorganosiloxane and/or polyurethane-polyorganosiloxane compound according to claim 1 containing at least one polyorganosiloxane residue of formula (2): 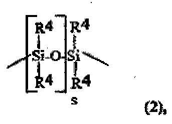 wherein
R⁴ Is a straight-chained, cyclic or branched, saturated, unsaturated or aromatic hydrocarbon residue of up to 20 carbon atoms, and/or R⁴ Is an alkoxy residue, whose alkyl part is a straight-chained, cyclic or branched, saturated alkyl residue with up to 20 carbon atoms, which may contain one or more oxygen atoms, and
s = 1 to 999.

3. The polycarbonate-polyorganosiloxane and/or polyurethane-polyorganosiloxane compound according to any one of claims 1 to 2 containing at least two structural elements of formula (1).

4. The polycorbonate-polyorganosiloxane and/or polyurethane-polyorganosiloxane compound according to any one of claims 1 to 3, **characterized in that** It contains amino groups, protonated amino groups, quarternary amino groups and/or polyether groups.

5. the polycarbonate-polyorganosiloxane and/or polyurethane-polyorganosiloxane compound according to any one of claims 1 to 4, wherein ST² is a residue of formula (5)
ST³-N⁺(R⁵)₂-ST⁴-N⁺(R⁵)₂-ST³- + 2 A⁻ (5)
wherein
R⁵ is as defined above,
ST³ is a di- or polyvalent, straight-chained or cyclic or branched, saturated or unsaturated or aromatic, substituted or unsubstituted hydrocarbon residue with 2 to 100 carbon atoms, which may contain -O-, -C(O)-, -NH- and/or -NR³-, wherein R³ is as defined above, and
ST⁴ Is a di- or polyvalent, straight-chained or cyclic or branched, saturated or unsaturated or aromatic, substituted or unsubstituted hydrocarbon residue with 2 to 100 carbon atoms, which may contain -O-, -C(O)-, -NH-, -NR³- and/or a polyorganosiloxane unit with 2 to 500 silicon atoms, wherein R³ Is as defined above, and
A⁻ Is an organic or inorganic anion.

6. The polycarbonate-polyorganosiloxane and/or polyurethane-polyorganosiloxane compound according to any one of claims 1 to 5 of the following formula (3): 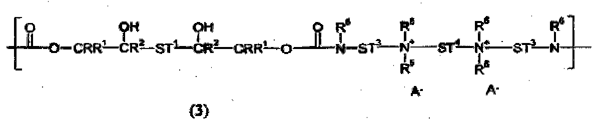 wherein
R, R¹, R², ST¹, ST³, ST⁴, R⁶ and R⁶ are as defined above, and
A⁻ is an organic or Inorganic anion,
provided that at least one of the residues ST¹, ST³ and ST⁴ contains a polyorganosiloxane residue.

7. The polycarbonate-polyorganosiloxane and/or polyurethane-polyorganosiloxane compound according to any one of claims 1 to 6, wherein ST¹ and/or ST² are selected from the group consisting of: polyorganosiloxane containing residues, polyether containing residues, polyorganosiloxane containing and polyether containing residues, monocyclic or polycyclic hydrocarbon residues, acyclic hydrocarbon residues optionally containing oxygen and hydrocarbon residues comprising an aromatic group and optionally containing oxygen,

8. A method for producing the polycarbonate-polyorganosiloxane and/or polyurethane-polyorganosiloxane compound according to any one of claims 1 to 7 comprising the step of reacting a compound of formula (6) 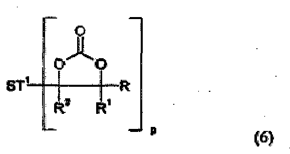 wherein R, R¹, R² and ST¹ are as defined above, and p ≥ 2,
with at least one compound of formula (7)
ST²-(Y-H)_{q},
wherein ST² and Y are as defined above, and wherein q ≥ 2.

9. A method for producing the polycarbonate-polyorganosiloxane and/or polyurethane-polyorganosiloxane compound according to any one of claims 1 to 7, comprising the step of reacting a compound of formula (6) 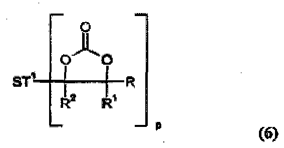 wherein R, R¹, R² and ST¹ are as defined above, and p ≥ 2,
with a compound of formula (8)
HY-ST³-NR⁵₂,
wherein ST³, Y and R⁵ are as defined above,
and a compound of formula [9]
ST^{4V}-(Q)ₜ,
wherein
Q Is a residue capable of alkylating an amino group, ST^{4V} forms the residue ST⁴ together with the part of the molecule which results from Q after quatemization, and t ≥ 2.

10. Use of the polycarbonate-polyorganosiloxane and/or polyurethane-polyorganosiloxane compound according to any one of claims 1 to 7 for producing coatings, agents for surface modification, elastomers, duromers, adhesives, primers for metal and plastic surfaces, polymer additives, laundry additives, rheological agents, cosmetic agents, fiber modification agents.

11. Use of the polycarbonate-polyorganosiloxane and/or polyurethane-polyorganosiloxane compound of any one of claims 1 to 7
- as softeners for fibers, particularly in laundry detergents, textile care agents, textile finishing agents,
- as softener component In laundry detergents, textile care agents, textile finishing agents,
- as polymer additive such as modifying agents for thermoplastic synthetic materials, such as polyolefines, polyamides, polyurethanes, poly(meth)acrylates, polycarbonates. polyesters,
- as agent for surface modification such as modification of hard surfaces such as for example glass, ceramics, tiles, concrete, and steel parts such as bodies of cars and ship hulls,
- as adhesive,
- as primer for metal and plastic surfaces such as primers for the linkage of silicone elastomers with other substrates such as steel, aluminum, glass, plastics such as epoxy resins, polyamides, polyphenylene sulfide, polyesters such as polyterephthalates,
- as rheological agent,
- as coating, sealant or elastomer,
- in cosmetic agents as emulsifiers, conditioning agent, firming agent, thickener,
- in cosmetic formulations for hairs as conditioning agent ("conditioner"),
as modifying agent,
- as modifier for low-temperature Impact resistance,
- as constituent In adhesives or sealants,
- as base material for producing elastomers such as thermoplastic elastomers such as for example for producing cable sheathings, tubes, gaskets, keyboard mats, membranes such as membranes with selective gas permeability,
- as coatings such as antifouling or non-stick coatings, tissue compatible coatings, flame retardant coatings and as coatings for biocompatible materials,
- as coating agents for cosmetics, body care products, paint additives, excipients In laundry detergents, defoaming formulations and textile processing formulations, for modifying resins or modifying bitumen,
- as packing material for electronic components,
- as insulation or shielding materials,
- as sealant in cavities with formation of condensation water such as In air planes, ships, automobiles,
- as additive in cleaning agents, detergents or care products,
- as additive for body care products,
- as coating material for wood, paper or paperboard,
- as mold release agent,
- as biocompatible material in medical applications such as contact lenses,
- as coating material for textile fibers or textile fabrics,
- as coating material for natural fabrics such as for example leather and fur clothing,
- as material for membranes and
- as material for photoactive systems, for example for lithographic processes, optical data recording or optical data transmission,
- as viscosity regulators, anti-static agents,
- as mixture components for silicone rubbers that can be cross-linked peroxyldically or by hydrosilylation (platinum catalysis) to form elastomers, and there lead to the modification of surface properties such as the modification of the diffusion of gases and liquids, and/or the modification of the swelling behavior of the silicone elastomers,
- as softeners for textile fibers,
- as softeners for treating textile fibers prior to, during and after washing with formulations based on anionic, non-ionic and cationic surfactants,
- as agent for the modification of natural and synthetic fibers such as for example hairs, cotton fibers and synthetic fibers such as polyester fibers and polyamide fibers as well as blended fabrics,
- In textile finishing agents, as well as
- In formulation containing detergents such as laundry detergents or cleaning products.

12. Use of the polycarbonate-polyorganosiloxane and/or polyurethane-polyorganosllaxane compound according to any one of claims 1 to 7,
- in solid or liquid detergent formulations in an amount of about 0.1 to 10 w.-% with respect to the total amount of the formulation,
- in cosmetic formulations and formulations for treating fibers such as textile care agents, in an amount of about 0.1 to 50 w.-% with respect to the total amount of the formulation,
- in formulations for treating and finishing of hard surfaces such as glass, ceramics, tiles, surfaces of synthetic material, metal surfaces, surfaces of paint, particularly ship hulls and bodies of cars, more particularly also in drying agent formulations for automatic car washing,
- as adhesive or primer respectively, preferably for the linkage of silicone elastomers with other substrates such as steel, aluminum, glass, epoxy resin, polyamide,
- as modifiers such as modifiers for low-temperature Impact resistance and polarity modifiers of hydrocarbon based polymers and silicon based elastomer systems which are based on peroxidic and platinum catalyzed cross-linking,
- In formulations for treating natural and synthetic fibers, for example cotton, wool, polyester and polyamide based synthetic fibers, particularly In form of textiles,
- in agents for treating fibers, particularly In detergent formulations containing anionic, non-ionic and/or cationic surfactants such as agents, which are constituents of the laundry detergent, agents, which are added separately to the running washing process, or agents, which are added after the washing process,
- as a constituent of separate softener systems, particularly based on cationic surfactants, particularly for the addition after washing of fibers and textiles,
- as ironing aid and agent for preventing or reversing of textile creasing,
- In formulations for the finishing of fibers, particularly for the first finishing and treatment of for example cotton, wool, polyester and polyamide based synthetic fibers, particularly in the form of textiles, paper and wood,
- In cosmetic systems for treating hairs and skin, particularly as pure ingredient, solution, mixture, emulsion or microemulsion in form of liquids, creams, or pastes, particularly In different viscosities,
- In cosmetic systems for treating hairs and skin, particularly in "rinse-off" products, such as for example "2-in-1" shampoos, "body wash" and hair conditioners for treating hair during and after cleaning, or after dyeing or treating hairs prior to bleaching, curling or uncurling, as well as so called "leave-in" products such as hair tonics, care creams, styling creams, hair gels, hair styling products, hair setting products, hair sprays, pump sprays, blow-waving compositions and blow-drying compositions, In hair dyes, particularly in permanent, semipermanent and temporary hair dyes,
- as a constituent of fabric softener formulations,
- as constituent of laundry freshener systems which are on solid carriers.

13. Laundry detergent formulations, cosmetic formulations or formulations for fiber treatment, containing at least one polycarbonate-polyorganosiloxane and/or polyurethane-polyorganosiloxane compound according to any one of claims 1 to 7,

14. A reactive composition containing at least one compound of formula (6): 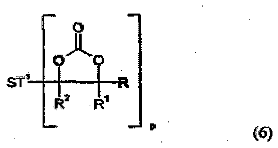 wherein R, R¹, R² and ST¹ are as defined above, and p ≥ 2,
and at least one compound of formula (7)
ST²-(Y-H)_{q},
wherein ST² and Y are as defined above, and wherein q ≥ 2,
provided that at least one of the residues ST¹ and ST² comprises a polyorganosiloxane residue.

15. A reactive composition containing at least one compound of formula (6): 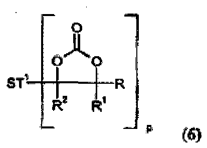 wherein R, R¹, R² and ST¹ are as defined above, and p ≥ 2, and
at least one compound of formula (8)
HY-ST³-NR⁵₂,
wherein ST³, Y and R⁵ are as defined above, and
at least one compound of formula (10)
Q-ST^{4V}-Q,
wherein
Q is as defined above,
provided that at least one of the residues ST¹, ST³ and/or ST⁴ comprises a polyorganosiloxane residue,

## Revendications

1. Composé de polycarbonate-polyorganosiloxane et/ou de polyuréthane-polyorganosiloxane contenant au moins un élément structurel de la formule (1) : 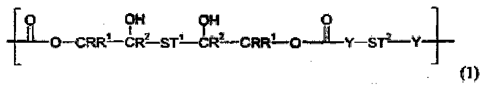 dans laquelle
R est respectivement sélectionné parmi hydrogène, alkyle, ou un lien avec le résidu ST¹ formant des structures cycliques sl R est un lien avec le résidu ST¹,
R¹ est respectivement sélectionné parmi hydrogène, alkyle, ou un lien avec le résidu ST¹ formant des structures cycliques sl R¹ est un lien avec le résidu ST¹,
R² est respectivement sélectionné parmi hydrogène, alkyle, ou un lien avec le résidu ST¹ formant des structures cycliques sl R² est un lien avec le résidu ST¹,
ST¹ est un résidu d'hydrocarbure bivalent ou polyvalent, linéaire, cyclique ou ramifié, saturé, Insaturé ou aromatique, substitué ou non substitué avec jusque 1000 atomes de carbone qui peut contenir un ou plusieurs groupes sélectionnés parmi :
-O-,
-C(O)-, et
une unité de polyorganosiloxane avec 2 à 1000 atomes de silicium,
dans laquelle
ST¹ ne contient pas de groupes de la formule -O-C(O)-O- et pas de groupes de la formule -O-C(O)-NH-,
s'il y a une majorité des résidus ST¹, ils peuvent être les mêmes ou différents,
Y est sélectionné Indépendamment parmi : -O-, -S- et -NR⁶-, dans lequel
R⁶ est de l'hydrogène ou un résidu d'hydrocarbure linéaire, cyclique ou ramifié, saturé, insaturé ou aromatique avec jusque 40 atomes de carbone, qui peut contenir un ou plusieurs groupes sélectionnés parmi -O-, -C(O)-, -NH-, -NR³- dans lequel R³ est défini comme ci-dessous, ou
R⁶ est un lien avec le résidu ST² formant des structures cycliques,
ST² est un résidu d'hydrocarbure bivalent ou polyvalent, linéaire, cyclique ou ramifié, saturé, insaturé ou aromatique, substitué ou non substitué avec jusque 1000 atomes de carbone, qui peut contenir un ou plusieurs groupes sélectionnés parmi :
-O-,
-C(O)-,
-NH-,
-NR³-, 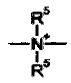 et
une unité de polyorganosiloxane avec 2 à 1000 atomes de silicium, dans laquelle
R³ est un résidu d'hydrocarbure linéaire, cyclique ou ramifié, saturé, insaturé ou aromatique avec jusque 40 atomes de carbone, qui peut contenir un ou plusieurs groupes sélectionné parmi -O-, -C(O)- et -NH- et peut être substitué le cas échéant par un groupe de silyle et
R⁶ est un résidu d'hydrocarbure linéaire, cyclique ou ramifié, saturé, insaturé ou aromatique avec Jusque 100 atomes de carbone qui peut contenir un ou plusieurs groupes sélectionné parmi -O-, -C(O)- et -NH- et peut être substitué le cas échéant par un groupe de silyle, ou deux résidus R⁵ forment un cycle de 5 à 7 chaînons avec l'atome d'azote à qui ils sont liés, qui peut contenir le cas échéant un ou deux hétéroatomes en plus, ou R⁶ ensemble avec R⁶ forment un résidu d'alkylène, résultant en un structure cyclique incluant Y et ST²,
s'il y a une majorité des résidu ST², ils peuvent être les mêmes ou différents,
à la condition qu'au moins un des résidus ST¹ et/ou ST² comprennent une unité de polyorganosiloxane,
ou des composé de l'addition d'un acide et/ou des sels en dérivant.

2. Composé de polycarbonate-polyorganosiloxane et/ou de polyuréthane-polyorganosiloxane selon la revendication 1 contenant au moins un résidu polyorganosiloxane de la formule (2) 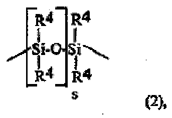 dans laquelle
R⁴ est un résidu d'hydrocarbure linéaire, cyclique ou ramifié, saturé, insaturé ou aromatique avec jusque 20 atomes de carbone et/ou R⁴ est un résidu d'alkoxy dont la partie d'alkyl est un résidu d'alkyl linéaire, cyclique ou ramifié, saturé avec jusque 20 atomes de carbone, qui peut contenir un ou plusieurs atomes d'oxygène et
s est = 1 à 999.

3. Composé de polycarbonate-polyorganosiloxane et/ou de polyuréthane-polyorganosiloxane selon l'une des revendications 1 à 2 contenant au moins deux unités structures de la formule (1)

4. Composé de polycarbonate-polyorganosiloxane et/ou de polyuréthane-polyorganosiloxane selon l'une des revendications 1 à 3 **caractérisé par le fait qu'**il contient des groupes amino, des groupes amino protonés, des groupes amino quarternaires et/ou des groupes polyéther,

5. Composé de polycarbonate-polyorganosiloxane et/ou de polyuréthane-polyorganosiloxane selon l'une des revendications 1 à 4, dans lequel ST² représente un résidu de la formule (5)
ST³-N⁺(R⁵)₂-ST⁴-N⁺(R⁵)₂-ST³- + 2 A⁻ (5)
dans laquelle
R⁵ est telle que définie ci-dessus.
ST³ est un résidu d'hydrocarbure bivalent ou polyvalent linéaire ou cyclique ou ramifié, saturé ou insaturé ou aromatique, substitué ou non substitué avec 2 à 100 atomes de carbone, qui peut contenir -O-,-C(O)-,-NH- et/ou -NR³- dans lequel R³ est défini comme ci-dessus et
ST⁴ est un résidu d'hydrocarbure bivalent ou polyvalent linéaire ou cyclique ou ramifé, saturé ou insaturé ou aromatique, substitué ou non substitué avec 2 à 100 atomes de carbone, qui peut contenir -O-, -C(O)-, -NH-, -NR³- et/ou une unité de polyorganoslioxane avec 2 à 500 atomes de silicium, dans lequel R³ est défini comme ci-dessus et
A⁻ est un anion organique ou inorganique.

6. Composé de polycarbonate-polyorganosiloxane et/ou de polyuréthane-polyorganosiloxane selon l'une des revendications 1 à 5 de la formule (3) suivante : 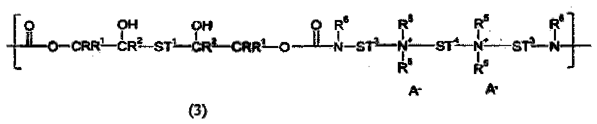 dans laquelle
R, R¹, R², ST¹, ST³, ST⁴, R⁶ et R⁶ sont tels que définis ci-dessus et
A⁻ est un anion organique ou inorganique
à la condition qu'au moins un des résidus ST¹, ST³ et ST⁴ contiennent une unité de polyorganosiloxane.

7. Composé de polycarbonate-polyorganosiloxane et/ou de polyuréthane-polyorganosiloxane selon l'une des revendications 1 à 6 dans lequel ST¹ et/ou ST² sont sélectionnés parmi le groupe consistant en des résidus contenant du polyorganosiloxane, des résidus contenant du polyéther, des résidus contenant du polyorgansiloxane et du polyéther, des résidus d'hydrocarbure monocycliques ou polycycliques, des résidus d'hydrocarbure acycliques qui peuvent contenir le cas échéant d'oxygène et des résidus d'hydrocarbure ayant des groupes aromatiques et qui peuvent contenir le cas échéant d'oxygène.

8. Procédé de fabrication de composé de polycarbonate-polyorganosiloxane et/ou de polyuréthane-polyorganosiloxane selon l'une des revendications 1 à 7 qui comprend l'étape de réaction d'un composé de la formule (6) 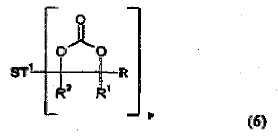 dans laquelle R, R¹, R² et ST¹ sont tels que définis ci-dessus et p est ≥ 2,
avec au moins un composé de la formule (7)
ST²-(Y-H)_{q},
dans laquelle ST² et Y sont tels que définis ci-dessus et dans laquelle q est ≥ 2.

9. Procédé de fabrication de composé de polycarbonate-polyorganosiloxane et/ou de polyuréthane-polyorganosiloxane selon l'une des revendications 1 à 7 qui comprend l'étape de réaction d'un composé de la formule (6) 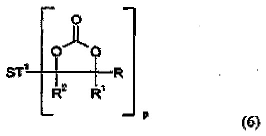 dans laquelle R, R¹, R² et ST¹ sont tels que définis ci-dessus et p est ≥ 2,
avec un composé de la formule (8)
HY-ST³-MR⁵₂,
dans laquelle ST³, Y et R⁶ sont tels que définis ci-dessus,
et un composé de la formule (9)
ST^{4V}-(Q)ₜ,
dans laquelle
Q est un résidu capable d'alkylation d'un groupe amino, ST^{4V} formé le résidu ST⁴ ensemble avec la partie de molécule résultant de Q après la réaction de quaternisation et t est ≥ 2.

10. Utilisation du composé selon l'une des revendications 1 à 7 pour la fabrication de revêtements, d'agents de modification de surfaces, d'élastomères, de duromères, de colles, de couches primaires pour les surfaces en métal ou en plastique, d'additifs de polymères, d'additifs de lessives, d'agents rhéologiques, d'agents cosmétiques, d'agents modification des fibres,

11. Utilisation du composé de polyuréthane-polyorganosiloxane et/ou de polycarbonate-polyorganosiloxane selon l'une des revendications 1 à 7
- en tant qu'assouplissant pour fibres en particulier dans les lessives, les nettoyants textiles, les agents de traitement des textiles,
- en tant que composants d'assouplissants dans les lessives, les nettoyants textiles, les agents de traitement des textiles,
- en tant qu'additifs de polymères comme agents de modification des thermoplastiques, comme des polyoléfines, des polyamides, des polyuréthanes, des poly(meth)acrylates, des polycarbonates, des polyesters,
- en tant qu'agents de modification des surfaces et pour la modification des surfaces dures telles que le verre, la céramique, le carrelage, le béton et les pièces en acier comme les carrosseries de voiture et les corps de bateaux,
- en tant que colle,
- en tant que couche primaire pour les surfaces en métal et en plastique, comme les couches primaires pour relier les élastomères en silicone avec d'autres substrats, comme l'acier, l'aluminium, le verre, les plastiques comme la résine d'époxyde, les polyamides, les sulfites de polyphenylène, les polyesters, comme les polytéréphtalates,
- en tant qu'agent rhéologique
- en tant que revêtement, pâte d'étanchéité ou élastomère,
- dans les produits cosmétiques comme les émulsifiant, les agents après-shampooing, les agents de fixation, les épaississeurs
- dans les formulations cosmétiques pour les cheveux en tant qu'après-shampooing (« conditioner »),
- en tant qu'agent de modification
- en tant que modificateur de la résistance au choc à basse température
- en tant que composants des joints et des colles
- en tant que matériau de départ pour la fabrication d'élastomères comme les élastomères thermoplastiques, comme par exemple pour la fabrication de cosses de câbles, de tuyaux, de joints, de tapis de clavier, de membranes, comme les membranes à passage sélectif de gaz,
- en tant que revêtement comme les revêtements antifouling, antiadhésifs, les housses textiles, les housses freinant les incendies et en tant que revêtement pour les matériaux biocompatibles,
- en tant que film de protection pour les produits cosmétiques, les soins du corps, les additifs de peinture, les agents des lessives, les formulations d'agents anti-mousses et les formulations de traitement de tissus, les modifications de résine ou de bitume,
- en tant que matériau d'emballage pour les composants électroniques,
- en tant que matériau de protection et d'emballage
- en tant que matériau d'étanchéité dans les espaces creux avec formation de condensation comme les avions, les bateaux, les voitures,
- en tant qu'additifs pour les produits nettoyants, d'entretien et de soin,
- en tant qu'additifs pour les soins du corps,
- en tant que matériau de revêtement pour le bols, le papier et le carton,
- en tant qu'agent de séparation des formes,
- en tant que matériau biocompatible pour les applications médicales comme les lentilles de contact,
- en tant que matériau de revêtement pour les fibres telles ou les tissus textiles,
- en tant que matériau de revêtement pour les tissus naturels comme le cuir ou la fourrure
- en tant que matériau pour les membranes et
- matériau pour les systèmes photoactifs par ex. le procédé lithographique, la sauvegarde optique des données ou la transmission optique des données en tant que régulateur de la viscosité, que fluide antistatique,
- en tant que composants de mélanges pour les caoutchoucs en silicone qui peuvent être associés par péroxyde pou par hydrosilylation (platine catalyse) avec des élastomères et peuvent alors servir à modifier les qualités des surfaces ainsi qu'à modifier la diffusion de gaz et de liquides et/ou à modifier le comportement source des élastomères en silicone
- en tant qu'adoucissant des fibres textiles,
- en tant qu'adoucissant pour le traitement des fibres textiles, avant, pendant et après le lavage avec des formulations basées sur des tensides anioniques, non-ioniques et cationiques
- en tant qu'agent pour modifier les fibres naturelles et synthétiques comme par exemple les cheveux, les fibres de coton et les fibres de synthèses comme les fibres de polyester et les fibres de polyamide ainsi que les tissus mixtes,
- en tant que liquide d'équipement textile et
- dans les formulations avec détergents comme les produits nettoyants et les lessives.

12. Utilisation du composé de polyuréthane-polyorganosiloxane et/ou de polycarbonate-polyorganosiloxane selon l'une des revendications 1 à 7
- dans des formulations de lessives liquides ou solides à hauteur de 0,1 à 10% du poids se basant sur la masse totale de la formulation,
- dans les formulations cosmétiques et les formulations de traitement des fibres comme les nettoyants textiles à hauteur de 0,1 à 50 % du poids se basant sur la masse totale de la formule,
- dans les formulations de traitement et d'équipement des surfaces dures comme le verre, la céramique, le carrelage, les surfaces plastiques, les surfaces en métal, les surfaces pointes, particulièrement les corps de bateaux et les carrosseries automobile, plus particulièrement également les formulations de séchage pour les systèmes mécaniques de lavage de voiture,
- en tant que colle ou de couche primaire privilégiée pour relier les élastomères de silicone avec les autres substrats comme l'acier, l'aluminium, le verre, la résine époxyde, le polyamide,
- en tant que modificateur comme les modificateurs de la résistance au choc à basse température et les modificateur de polarité pour les polymères à base d'hydrocarbure et les systèmes d'élastomère à base de silicone se basant sur une connexion peroxydique ou avec platine catalyse.
- dans les formulations de traitement des fibres naturelles et synthétiques comme par exemple le coton, la laine, les fibres synthétiques basées sur le polyester et le polyamide, particulièrement sous forme de textiles,
- dans les agents de traitement des fibres en particuliers les formulations de lessivé contenant des tensides anioniques, non Ioniques, et/ou cationiques, comme les agents contenus dans les lessives qui sont versés séparément pendant le lavage ou les agents qui sont ajoutés après le lavage,
- en tant que composant des systèmes d'adoucissants, particulièrement sur la base de tensides cationiques, en particulier pour l'ajout après le lavage des fibres et des textiles,
- en tant qu'aide au repassage et agent permettant d'empêcher ou d'éviter le retour des bouloches,
- dans les formulations de traitement des fibres, particulièrement pour le premier traitement du coton par exemple, de la laine, des fibres synthétiques basées sur la polyester et le polyamide, particulièrement sous forme de textiles, de papier et de bois,
- dans les systèmes cosmétiques pour le traitement des cheveux et de la peau, en particulier en tant que substance pure, solution, mélange, émulsion ou microémulsion sous forme de liquides, de crèmes ou de pâtes, en particulier avec des viscosités différentes,
- dans les systèmes cosmétiques pour le traitement des cheveux et de la peau, particulièrement dans les produits « rinse off », comme par exemple les shampooings 2 en 1, les « body wash » et les rinçages pour le traitement des cheveux pendant et après le nettoyage, ou après la coloration ou le traitement des cheveux avant la décoloration ainsi que les produits appelés « leave-in » comme les soins pour cheveux les crèmes de soin, les crèmes à friser, les gels, les produits de styling, les laques, les sprays à cheveux, les vaporisateurs, les produits d'ondulation, les produits de fixation au séchage, dans les colorations, en particulier les produits de coloration temporaires, semi-permanentes et permanents,
- en tant que composant des formulations d'adoucissants
- en tant que composant dans les systèmes de rafraîchissement du linge se trouvant sur des supports fixes.

13. Formulations de lessive, formulations cosmétiques ou formulations de traitement des fibres, contenant au moins un composé de polycarbonate-polyorganosiloxane et/ou un composant de polyuréthane-polyorganosiloxane selon l'une des revendications 1 à 7.

14. Composition réactive contenant au moins un composé de la formule (6) 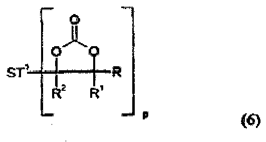 dans laquelle R, R¹, R² et ST¹ sont tels que définis ci-dessus et p est ≥ 2, et au moins un composé de la formule (7) :
ST²-(Y-H)_{q},
dans laquelle ST² et Y sont tels que définis ci-dessus et dans laquelle q est ≥ 2,
à la condition qu'au moins un des résidus ST¹ et ST² comprennent un résidu de polyorganosiloxane.

15. Composition réactive contenant au moins un composé de la formule (6) 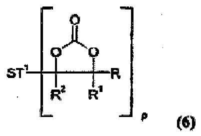 dans laquelle R, R¹, R² et ST¹ sont tels que définis ci-dessus et p est ≥ 2, et
au moins un composé de la formule (8) ;
HY-ST³-NR⁵₂,
dans laquelle ST³, Y et R⁵ sont tels que définis ci-dessus et
au moins un composé de la formule (10)
Q-ST^{4V}-Q,
dans laquelle Q est défini comme ci-dessus,
à la condition qu'au moins un des résidus ST¹, ST³ et/ou ST⁴ comprennent un résidu de polyorganosiloxane.
